# EUROPEAN PATENT APPLICATION

(11) **EP 2 323 026 A2**
(43) Date of publication of application: **18.05.2011**
(21) Application number: 10013562.3
(22) Date of filing: 12.10.2010
(51) Int. Cl.: G06F 3/048

(54) **Mobile terminal and image processing method therefor**

(30) Priority: 12.10.2009 KR 20090096730; 17.09.2010 KR 20100091488
(71) Applicant: LG ELECTRONICS INC., Yeongdeungpo-gu Seoul 150-721 (KR)
(72) Inventor: Kim, Jong Hwan, Seoul 153-801 (KR); Han, Baik, Seoul 153-801 (KR)
(74) Representative: Thum, Bernhard

(57) **Abstract**

A mobile terminal and image processing method therein are disclosed, by which a screen effect can be given to a specific object in a currently displayed image. The present invention includes displaying a first image on a screen, receiving an input of a selection action for a specific object included in the displayed first image, performing a screen effect processing on the specific object selected by the selection action, and displaying the first image including the specific object having the screen effect processing performed thereon.

## Description

### BACKGROUND OF THE INVENTION

### Field of the Invention

The present invention relates to a mobile terminal, and more particularly, to a mobile terminal and image processing method therein. Although the present invention is suitable for a wide scope of applications, it is particularly suitable for recognizing and processing a specific object in an image.

### Discussion of the Related Art

Generally, terminals can be classified into mobile/portable terminals and stationary terminals. The mobile terminals can be classified into handheld terminals and vehicle mount terminals again according to possibility of user's direct portability.

As functions of the terminal are diversified, the terminal is implemented as a multimedia player provided with composite functions such as photographing of photos or moving pictures, playback of music or moving picture files, game play, broadcast reception and the like for example.

To support and increase of the terminal functions, it may be able to consider the improvement of structural part and/or software part of the terminal.

A mobile terminal according to a related art is able to display a still image or video in the course of executing such an application as a photo album, a video play, a broadcast output and the like.

In particular, in case of attempting to edit a currently displayed still image or video, the mobile terminal is able to edit the still image or video by selecting/executing a menu item of an image editing among a plurality of menu items.

However, according to the related art, even if an image is edited, a method of editing a specific object included in the image is not provided despite editing a whole image.

Moreover, in case of editing an image, the related art fails to provide a method of processing a specific object included in the image 3-dimensionally only.

Moreover, according to the related art, in case of attempting to perform an image editing, it is inconvenient to select a menu item of the image editing through a menu search.

### SUMMARY OF THE INVENTION

Accordingly, the present invention is directed to a mobile terminal and image processing method therein that substantially obviate one or more problems due to limitations and disadvantages of the related art.

An object of the present invention is to provide a mobile terminal and image processing method therein, by which a screen effect can be given to a specific object in a currently displayed image.

Another object of the present invention is to provide a mobile terminal and image processing method therein, by which a user input signal for commanding a screen effect processing of a specific object in a currently displayed image can be quickly inputted.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a mobile terminal according to the present invention includes a display unit configured to display a first image on a screen, a user input unit receiving an input of a selection action for a specific object included in the displayed first image, and a controller performing a screen effect processing on the specific object selected by the selection action, the controller controlling the display unit to display the first image including the specific object having the screen effect processing performed thereon.

In another aspect of the present invention, a method of processing an image in a mobile terminal includes a first displaying step of displaying a first image on a screen, an inputting step of receiving an input of a selection action for a specific object included in the displayed first image, a processing step of performing a screen effect processing on the specific object selected by the selection action, and a second displaying step of displaying the first image including the specific object having the screen effect processing performed thereon.

Accordingly, the present invention provides the following effects and/or advantages.

First of all, the present invention is able to perform a screen effect processing or a 3D processing on a user-specific object in an image displayed on a screen.

Secondly, the present invention selects a specific object to perform a screen effect processing or a 3D processing thereon in various ways and is also able to perform the screen effect processing or the 3D processing differently according to a type of a selection action.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
- FIG. 1: is a block diagram of a mobile terminal according to one em- bodiment of the present invention;
- FIG. 2A and 2B: are front diagrams of a mobile terminal for explaining one opera- tional state of the mobile terminal according to the present in- vention;
- FIG. 3: is a diagram for concept of proximity depth;
- FIG. 4: is a flowchart for a method of processing an image in a mobile terminal according to one embodiment of the present invention;
- FIGs. 5A to 5E: are diagrams of a process for inputting a selection action on a specific object according to the present invention;
- FIGs. 6A to 6E: are diagrams of specific objects on which a screen effect pro- cessing according to the present invention is performed;
- FIGs. 7A to 7E: are diagrams of specific objects on which a 3D processing ac- cording to the present invention is performed;
- FIGs. 8A to 8E: are diagrams for performing a screen effect processing or a 3D processing on a specific part of a specific object according to the present invention;
- FIGs. 9A to 10D: are diagrams of a plurality of auxiliary images including a specific object on which a screen effect processing or a 3D processing is performed according to the present invention;
- FIGs. 11A to 11C: are diagrams for performing a screen effect processing or a 3D processing on a specific object included in a video according to the present invention; and
- FIGs. 12A to 12H: are diagrams for controlling an image display corresponding to a control action on an image according to the present invention.

### DETAILED DESCRIPTION OF THE INVENTION

In the following detailed description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or similar parts.

First of all, mobile terminals described in this disclosure can include a mobile phone, a smart phone, a laptop computer, a digital broadcast terminal, a PDA (personal digital assistants), a PMP (portable multimedia player), a navigation system and the like.

Except a case applicable to a mobile terminal only, it is apparent to those skilled in the art that the configurations according to an embodiment described in this disclosure is applicable to such a stationary terminal as a digital TV, a desktop computer and the like.

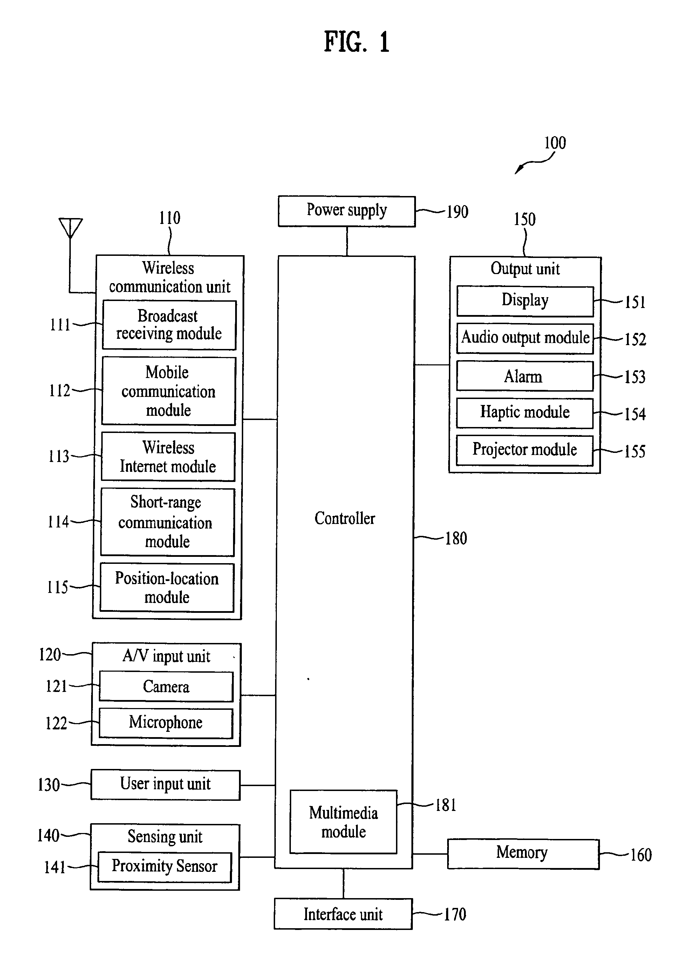

FIG. 1 is a block diagram of a mobile terminal according to one embodiment of the present invention.

Referring to FIG. 1, a mobile terminal 100 according to one embodiment of the present invention includes a wireless communication unit 110, an A/V (audio/video) input unit 120, a user input unit 130, a sensing unit 140, an output unit 150, a memory 160, an interface unit 170, a controller 180, a power supply unit 190 and the like. FIG. 1 shows the mobile terminal 100 having various components, but it is understood that implementing all of the illustrated components is not a requirement. Greater or fewer components may alternatively be implemented.

In the following description, the above elements of the mobile terminal 100 are explained in sequence.

First of all, the wireless communication unit 110 typically includes one or more components which permits wireless communication between the mobile terminal 100 and a wireless communication system or network within which the mobile terminal 100 is located. For instance, the wireless communication unit 110 can include a broadcast receiving module 111, a mobile communication module 112, a wireless internet module 113, a short-range communication module 114, a position-location module 115 and the like.

The broadcast receiving module 111 receives a broadcast signal and/or broadcast associated information from an external broadcast managing server via a broadcast channel.

The broadcast channel may include a satellite channel and a terrestrial channel.

The broadcast managing server generally refers to a server which generates and transmits a broadcast signal and/or broadcast associated information or a server which is provided with a previously generated broadcast signal and/or broadcast associated information and then transmits the provided signal or information to a terminal. The broadcast signal may be implemented as a TV broadcast signal, a radio broadcast signal, and a data broadcast signal, among others. If desired, the broadcast signal may further include a broadcast signal combined with a TV or radio broadcast signal.

The broadcast associated information includes information associated with a broadcast channel, a broadcast program, a broadcast service provider, etc. And, the broadcast associated information can be provided via a mobile communication network. In this case, the broadcast associated information can be received by the mobile communication module 112.

The broadcast associated information can be implemented in various forms. For instance, broadcast associated information may include an electronic program guide (EPG) of digital multimedia broadcasting (DMB) and electronic service guide (ESG) of digital video broadcast-handheld (DVB-H).

The broadcast receiving module 111 may be configured to receive broadcast signals transmitted from various types of broadcast systems. By nonlimiting example, such broadcasting systems include digital multimedia broadcasting-terrestrial (DMB-T), digital multimedia broadcasting-satellite (DMB-S), digital video broadcast-handheld (DVB-H), the data broadcasting system known as media forward link only (MediaFLO®) and integrated services digital broadcast-terrestrial (ISDB-T). Optionally, the broadcast receiving module 111 can be configured suitable for other broadcasting systems as well as the above-explained digital broadcasting systems.

The broadcast signal and/or broadcast associated information received by the broadcast receiving module 111 may be stored in a suitable device, such as a memory 160.

The mobile communication module 112 transmits/receives wireless signals to/from one or more network entities (e.g., base station, external terminal, server, etc.). Such wireless signals may represent audio, video, and data according to text/multimedia message transceivings, among others.

The wireless internet module 113 supports Internet access for the mobile terminal 100. This module may be internally or externally coupled to the mobile terminal 100. In this case, the wireless Internet technology can include WLAN(Wireless LAN) (Wi-Fi), Wibro (Wireless broadband), Wimax (World Interoperability for Microwave Access), HSDPA(High Speed Downlink Packet Access), etc.

The short-range communication module 114 facilitates relatively short-range communications. Suitable technologies for implementing this module include radio frequency identification (RFID), infrared data association (IrDA), ultra-wideband (UWB), as well at the networking technologies commonly referred to as Bluetooth and Zig-Bee, to name a few.

The position-location module 115 identifies or otherwise obtains the location of the mobile terminal 100. If desired, this module may be implemented with a global positioning system (GPS) module.

Referring to FIG. 1, the audio/video (A/V) input unit 120 is configured to provide audio or video signal input to the mobile terminal 100. As shown, the A/V input unit 120 includes a camera 121 and a microphone 122. The camera 121 receives and processes image frames of still pictures or video, which are obtained by an image sensor in a video call mode or a photographing mode. And, the processed image frames can be displayed on the display unit 151.

The image frames processed by the camera 121 can be stored in the memory 160 or can be externally transmitted via the wireless communication unit 110. Optionally, at least two cameras 121 can be provided to the mobile terminal 100 according to environment of usage.

The microphone 122 receives an external audio signal while the portable device is in a particular mode, such as phone call mode, recording mode and voice recognition. This audio signal is processed and converted into electric audio data. The processed audio data is transformed into a format transmittable to a mobile communication base station via the mobile communication module 112 in case of a call mode. The microphone 122 typically includes assorted noise removing algorithms to remove noise generated in the course of receiving the external audio signal.

The user input unit 130 generates input data responsive to user manipulation of an associated input device or devices. Examples of such devices include a keypad, a dome switch, a touchpad (e.g., static pressure/capacitance), a jog wheel, a jog switch, etc.

The sensing unit 140 provides sensing signals for controlling operations of the mobile terminal 100 using status measurements of various aspects of the mobile terminal. For instance, the sensing unit 140 may detect an open/close status of the mobile terminal 100, relative positioning of components (e.g., a display and keypad) of the mobile terminal 100, a change of position of the mobile terminal 100 or a component of the mobile terminal 100, a presence or absence of user contact with the mobile terminal 100, orientation or acceleration/deceleration of the mobile terminal 100. As an example, consider the mobile terminal 100 being configured as a slide-type mobile terminal. In this configuration, the sensing unit 140 may sense whether a sliding portion of the mobile terminal is open or closed. Other examples include the sensing unit 140 sensing the presence or absence of power provided by the power supply 190, the presence or absence of a coupling or other connection between the interface unit 170 and an external device. And, the sensing unit 140 can include a proximity sensor 141.

The output unit 150 generates outputs relevant to the senses of sight, hearing, touch and the like. And, the output unit 150 includes the display unit 151, an audio output module 152, an alarm unit 153, a haptic module 154, a projector module 155 and the like.

The display unit 151 is typically implemented to visually display (output) information associated with the mobile terminal 100. For instance, if the mobile terminal is operating in a phone call mode, the display will generally provide a user interface (UI) or graphical user interface (GUI) which includes information associated with placing, conducting, and terminating a phone call. As another example, if the mobile terminal 100 is in a video call mode or a photographing mode, the display unit 151 may additionally or alternatively display images which are associated with these modes, the UI or the GUI.

The display module 151 may be implemented using known display technologies including, for example, a liquid crystal display (LCD), a thin film transistor-liquid crystal display (TFT-LCD), an organic light-emitting diode display (OLED), a flexible display and a three-dimensional display. The mobile terminal 100 may include one or more of such displays.

Some of the above displays can be implemented in a transparent or optical transmittive type, which can be named a transparent display. As a representative example for the transparent display, there is TOLED (transparent OLED) or the like. A rear configuration of the display unit 151 can be implemented in the optical transmittive type as well. In this configuration, a user is able to see an object in rear of a terminal body via the area occupied by the display unit 151 of the terminal body.

At least two display units 151 can be provided to the mobile terminal 100 in accordance with the implemented configuration of the mobile terminal 100. For instance, a plurality of display units can be arranged on a single face of the mobile terminal 100 in a manner of being spaced apart from each other or being built in one body. Alternatively, a plurality of display units can be arranged on different faces of the mobile terminal 100.

In case that the display unit 151 and a sensor for detecting a touch action (hereinafter called 'touch sensory configures a mutual layer structure (hereinafter called 'touchscreen'), it is able to use the display unit 151 as an input device as well as an output device. In this case, the touch sensor can be configured as a touch film, a touch sheet, a touchpad or the like.

The touch sensor can be configured to convert a pressure applied to a specific portion of the display unit 151 or a variation of a capacitance generated from a specific portion of the display unit 151 to an electric input signal. Moreover, it is able to configure the touch sensor to detect a pressure of a touch as well as a touched position or size.

If a touch input is made to the touch sensor, signal(s) corresponding to the touch is transferred to a touch controller. The touch controller processes the signal(s) and then transfers the processed signal(s) to the controller 180. Therefore, the controller 180 is able to know whether a prescribed portion of the display unit 151 is touched.

Referring to FIG. 1, a proximity sensor (not shown in the drawing) can be provided to an internal area of the mobile terminal 100 enclosed by the touchscreen or around the touchscreen. The proximity sensor is the sensor that detects a presence or non-presence of an object approaching a prescribed detecting surface or an object existing around the proximity sensor using an electromagnetic field strength or infrared ray without mechanical contact. Hence, the proximity sensor has durability longer than that of a contact type sensor and also has utility wider than that of the contact type sensor.

The proximity sensor can include one of a transmittive photoelectric sensor, a direct reflective photoelectric sensor, a mirror reflective photoelectric sensor, a radio frequency oscillation proximity sensor, an electrostatic capacity proximity sensor, a magnetic proximity sensor, an infrared proximity sensor and the like. In case that the touchscreen includes the electrostatic capacity proximity sensor, it is configured to detect the proximity of a pointer using a variation of electric field according to the proximity of the pointer. In this case, the touchscreen (touch sensor) can be classified as the proximity sensor.

In the following description, for clarity, an action that a pointer approaches without contacting with the touchscreen to be recognized as located on the touchscreen is named 'proximity touch'. And, an action that a pointer actually touches the touchscreen is named 'contact touch'. The meaning of the position on the touchscreen proximity-touched by the pointer means the position of the pointer which vertically opposes the touchscreen when the pointer performs the proximity touch.

The proximity sensor detects a proximity touch and a proximity touch pattern (e.g., a proximity touch distance, a proximity touch duration, a proximity touch position, a proximity touch shift state, etc.). And, information corresponding to the detected proximity touch action and the detected proximity touch pattern can be outputted to the touchscreen.

The audio output module 152 functions in various modes including a call-receiving mode, a call-placing mode, a recording mode, a voice recognition mode, a broadcast reception mode and the like to output audio data which is received from the wireless communication unit 110 or is stored in the memory 160. During operation, the audio output module 152 outputs audio relating to a particular function (e.g., call received, message received, etc.). The audio output module 152 is often implemented using one or more speakers, buzzers, other audio producing devices, and combinations thereof.

The alarm unit 153 is output a signal for announcing the occurrence of a particular event associated with the mobile terminal 100. Typical events include a call received event, a message received event and a touch input received event. The alarm unit 153 is able to output a signal for announcing the event occurrence by way of vibration as well as video or audio signal. The video or audio signal can be outputted via the display unit 151 or the audio output unit 152. Hence, the display unit 151 or the audio output module 152 can be regarded as a part of the alarm unit 153.

The haptic module 154 generates various tactile effects that can be sensed by a user. Vibration is a representative one of the tactile effects generated by the haptic module 154. Strength and pattern of the vibration generated by the haptic module 154 are controllable. For instance, different vibrations can be outputted in a manner of being synthesized together or can be outputted in sequence.

The haptic module 154 is able to generate various tactile effects as well as the vibration. For instance, the haptic module 154 generates the effect attributed to the arrangement of pins vertically moving against a contact skin surface, the effect attributed to the injection/suction power of air though an injection/suction hole, the effect attributed to the skim over a skin surface, the effect attributed to the contact with electrode, the effect attributed to the electrostatic force, the effect attributed to the representation of hold/cold sense using an endothermic or exothermic device and the like.

The haptic module 154 can be implemented to enable a user to sense the tactile effect through a muscle sense of finger, arm or the like as well as to transfer the tactile effect through a direct contact. Optionally, at least two haptic modules 154 can be provided to the mobile terminal 100 in accordance with the corresponding configuration type of the mobile terminal 100.

The projector module 155 is the element for performing an image projector function using the mobile terminal 100. And, the projector module 155 is able to display an image, which is identical to or partially different at least from the image displayed on the display unit 151, on an external screen or wall according to a control signal of the controller 180.

In particular, the projector module 155 can include a light source (not shown in the drawing) generating light (e.g., laser) for projecting an image externally, an image producing means (not shown in the drawing) for producing an image to output externally using the light generated from the light source, and a lens (not shown in the drawing) for enlarging to output the image externally in a predetermined focus distance. And, the projector module 155 can further include a device (not shown in the drawing) for adjusting an image projected direction by mechanically moving the lens or the whole module.

The projector module 155 can be classified into a CRT (cathode ray tube) module, an LCD (liquid crystal display) module, a DLP (digital light processing) module or the like according to a device type of a display means. In particular, the DLP module is operated by the mechanism of enabling the light generated from the light source to reflect on a DMD (digital micro-mirror device) chip and can be advantageous for the downsizing of the projector module 151.

Preferably, the projector module 155 can be provided in a length direction of a lateral, front or backside direction of the mobile terminal 100. And, it is understood that the projector module 155 can be provided to any portion of the mobile terminal 100 according to the necessity thereof.

The memory unit 160 is generally used to store various types of data to support the processing, control, and storage requirements of the mobile terminal 100. Examples of such data include program instructions for applications operating on the mobile terminal 100, contact data, phonebook data, messages, audio, still pictures, moving pictures, etc. And, a recent use history or a cumulative use frequency of each data (e.g., use frequency for each phonebook, each message or each multimedia) can be stored in the memory unit 160. Moreover, data for various patterns of vibration and/or sound outputted in case of a touch input to the touchscreen can be stored in the memory unit 160.

The memory 160 may be implemented using any type or combination of suitable volatile and non-volatile memory or storage devices including hard disk, random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, multimedia card micro type memory, card-type memory (e.g., SD memory, XD memory, etc.), or other similar memory or data storage device. And, the mobile terminal 100 is able to operate in association with a web storage for performing a storage function of the memory 160 on Internet.

The interface unit 170 is often implemented to couple the mobile terminal 100 with external devices. The interface unit 170 receives data from the external devices or is supplied with the power and then transfers the data or power to the respective elements of the mobile terminal 100 or enables data within the mobile terminal 100 to be transferred to the external devices. The interface unit 170 may be configured using a wired/wireless headset port, an external charger port, a wired/wireless data port, a memory card port, a port for coupling to a device having an identity module, audio input/output ports, video input/output ports, an earphone port and/or the like.

The identity module is the chip for storing various kinds of information for authenticating a use authority of the mobile terminal 100 and can include User Identify Module (UIM), Subscriber Identify Module (SIM), Universal Subscriber Identity Module (USIM) and/or the like. A device having the identity module (hereinafter called 'identity device') can be manufactured as a smart card. Therefore, the identity device is connectible to the mobile terminal 100 via the corresponding port.

When the mobile terminal 110 is connected to an external cradle, the interface unit 170 becomes a passage for supplying the mobile terminal 100 with a power from the cradle or a passage for delivering various command signals inputted from the cradle by a user to the mobile terminal 100. Each of the various command signals inputted from the cradle or the power can operate as a signal enabling the mobile terminal 100 to recognize that it is correctly loaded in the cradle.

The controller 180 typically controls the overall operations of the mobile terminal 100. For example, the controller 180 performs the control and processing associated with voice calls, data communications, video calls, etc. The controller 180 may include a multimedia module 181 that provides multimedia playback. The multimedia module 181 may be configured as part of the controller 180, or implemented as a separate component.

Moreover, the controller 180 is able to perform a pattern recognizing process for recognizing a writing input and a picture drawing input carried out on the touchscreen as characters or images, respectively.

The power supply unit 190 provides power required by the various components for the mobile terminal 100. The power may be internal power, external power, or combinations thereof.

Various embodiments described herein may be implemented in a computer-readable medium using, for example, computer software, hardware, or some combination thereof. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. Such embodiments may also be implemented by the controller 180.

For a software implementation, the embodiments described herein may be implemented with separate software modules, such as procedures and functions, each of which perform one or more of the functions and operations described herein. The software codes can be implemented with a software application written in any suitable programming language and may be stored in memory such as the memory 160, and executed by a controller or processor, such as the controller 180.

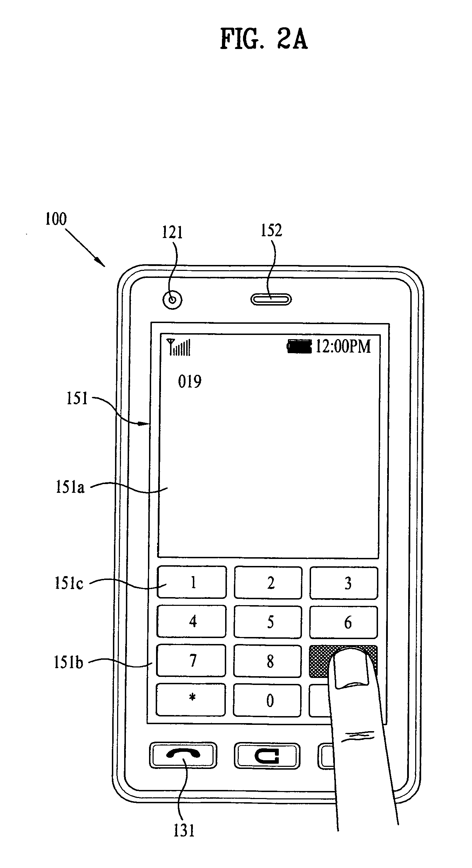

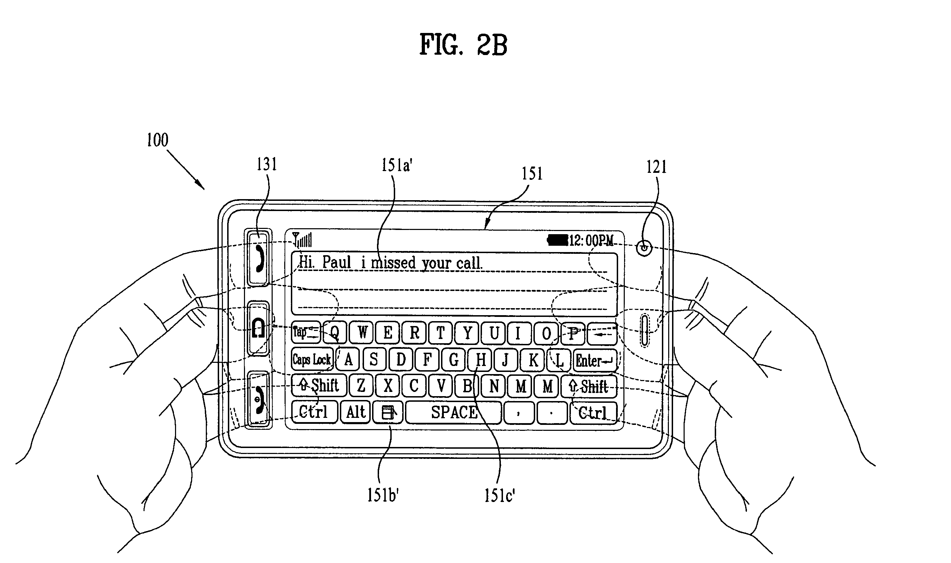

Interconnected operational mechanism between the display unit 151 and the touchpad (not shown) are explained with reference to FIG. 2A and FIG. 2B as follows.

FIG. 2A and FIG. 2B are front-view diagrams of a terminal according to one embodiment of the present invention for explaining an operational state thereof.

First of all, various kinds of visual informations can be displayed on the display unit 151. And, theses informations can be displayed in characters, numerals, symbols, graphics, icons and the like.

In order to input the information, at least one of the characters, numerals, symbols, graphics and icons are represented as a single predetermined array to be implemented in a keypad formation. And, this keypad formation can be so-called 'soft keys'.

FIG. 2A shows that a touch applied to a soft key is inputted through a front face of a terminal body.

The display unit 151 is operable through an entire area or by being divided into a plurality of regions. In the latter case, a plurality of the regions can be configured interoperable.

For instance, an output window 151a and an input window 151b are displayed on the display unit 151. A soft key 151c representing a digit for inputting a phone number or the like is outputted to the input window 151b. If the soft key 151c is touched, a digit corresponding to the touched soft key is outputted to the output window 151a. If the first manipulating unit 131 is manipulated, a call connection for the phone number displayed on the output window 151a is attempted.

FIG. 2B shows that a touch applied to a soft key is inputted through a rear face of a terminal body. If FIG. 2A shows a case that the terminal body is vertically arranged (portrait), FIG. 2B shows a case that the terminal body is horizontally arranged (landscape). And, the display unit 151 can be configured to change an output picture according to the arranged direction of the terminal body.

FIG. 2B shows that a text input mode is activated in the terminal.

An output window 151a' and an input window 151b' are displayed on the display unit 151. A plurality of soft keys 151c' representing at least one of characters, symbols and digits can be arranged in the input window 151b'. The soft keys 151c' can be arranged in the QWERTY key formation.

If the soft keys 151c' are touched through the touchpad, the characters, symbols and digits corresponding to the touched soft keys are outputted to the output window 151a'. Thus, the touch input via the touchpad is advantageous in that the soft keys 151c' can be prevented from being blocked by a finger in case of touch, which is compared to the touch input via the display unit 151. In case that the display unit 151 and the touchpad are configured transparent, it is able to visually check fingers located at the backside of the terminal body. Hence, more correct touch inputs are possible.

Besides, the display unit 151 or the touchpad can be configured to receive a touch input by scroll. A user scrolls the display unit 151 or the touchpad to shift a cursor or pointer located at an entity (e.g., icon or the like) displayed on the display unit 151. Furthermore, in case that a finger is shifted on the display unit 151 or the touchpad, a path of the shifted finger can be visually displayed on the display unit 151. This may be useful in editing an image displayed on the display unit 151.

To cope with a case that both of the display unit (touchscreen) 151 and the touchpad are touched together within a predetermined time range, one function of the terminal can be executed. The above case of the simultaneous touch may correspond to a case that the terminal body is held by a user using a thumb and a first finger (clamping). The above function can include activation or deactivation for the display unit 151 or the touchpad.

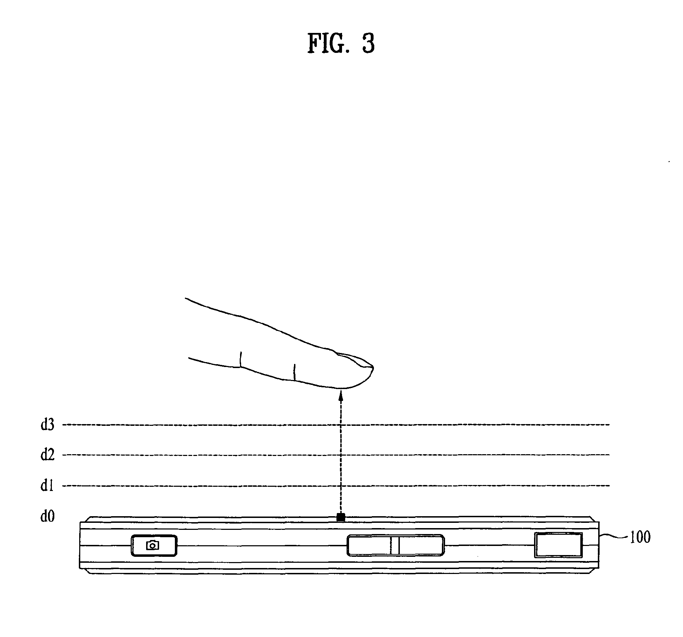

The proximity sensor 141 described with reference to FIG. 1 is explained in detail with reference to FIG. 3 as follows.

FIG. 3 is a conceptional diagram for explaining a proximity depth of a proximity sensor.

Referring to FIG. 3, when such a pointer as a user's finger, a pen and the like approaches the touchscreen, a proximity sensor 141 provided within or in the vicinity of the touchscreen detects the approach of the pointer and then outputs a proximity signal.

The proximity sensor 141 can be configured to output a different proximity signal according to a distance between the pointer and the proximity-touched touchscreen (hereinafter named 'proximity depth).

In FIG. 3, exemplarily shown is a cross-section of the touchscreen provided with a proximity sensor capable to three proximity depths for example. And, it is understood that a proximity sensor capable of proximity depths amounting to the number smaller than 3 or equal to or greater than 4 is possible.

In detail, in case that the pointer is fully contacted with the touchscreen (d0), it is recognized as a contact touch. In case that the pointer is located to be spaced apart from the touchscreen in a distance smaller than d1, it is recognized as a proximity touch to a first proximity depth. In case that the pointer is located to be spaced apart from the touchscreen in a distance between d1 and d2, it is recognized as a proximity touch to a second proximity depth. In case that the pointer is located to be spaced apart from the touchscreen in a distance smaller than d3 or equal to or greater than d2, it is recognized as a proximity touch to a third proximity depth. In case that the pointer is located to be spaced apart from the touchscreen in a distance equal to or greater than d3, it is recognized as a proximity touch is released.

Hence, the controller 180 is able to recognize the proximity touch as one of various input signals according to the proximity depth and position of the pointer. And, the controller 180 is able to perform various operation controls according to the various input signals.

First of all, a mobile terminal mentioned in the following description can include at least one of the components shown in FIG. 1. Moreover, the mobile terminal 100 is able to perform a 3D display as well as a 2D display using the display unit 151.

According to the present invention, a 3-dimensional image (hereinafter abbreviated 3D image) is a planar image generated through computer graphic software. And, a stereoscopic 3D image can include an image (or a 4D image) from which a gradual depth and stereoscopy of an object located on a monitor or screen can be sensed like those of an object in a real space. In the following description, an image displayed 3-dimensionally can include a 3D image or a stereoscopic 3D image.

According to the present invention, 3D display types can include a stereoscopic type (or a spectacle type, preferred for home TV), an autostereoscopic type (or a non-spectacle type, preferred for mobile terminals), a projection type (or a holographic type) and the like.

A method of processing an image in a mobile terminal according to the present invention is explained in detail with reference to the accompanying drawings.

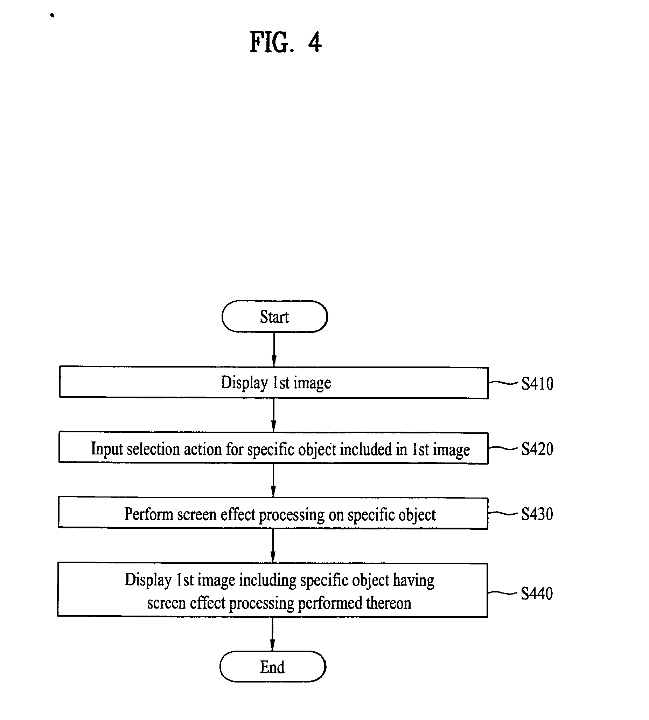

FIG. 4 is a flowchart for a method of processing an image in a mobile terminal according to one embodiment of the present invention.

Referring to FIG. 4, the mobile terminal 100 displays a first image on a screen via the display unit 151 under the control of the controller 180 [S410].

In the displaying step S410, the mobile terminal is able to display a still image (e.g., a picture, an animation, a captured image, etc.) according to an execution of a still image album application or a video (e.g., a video taken via a camera, a recorded broadcast, a downloaded video, a flash, an animation, etc.) according to an execution of a video album application as the first image.

In this case, the first image is previously stored in the memory 160 or can be received from an external terminal or an external server via the wireless communication unit 110.

Subsequently, the mobile terminal 100 receives an input of a selection action on a specific object included in the first image displayed in the displaying step S410 [S420].

Moreover, in the inputting step s420, the mobile terminal 100 is able to further receive an input of a 3D processing command action for the specific object selected by the inputted selection action.

In this case, the object means at least one object included in the first image. For instance, the object can include such an object included in the first image as a person, a face, a house, a tree, a car and the like.

The selection action is the action for selecting a specific one of at least one or more objects included in the first image. And, the 3D processing command action can mean the action for commanding a 3D processing on the selected specific object.

For instance, both of the selection action and the 3D processing command action can be inputted via a single user action. Alternatively, each of the selection action and the 3D processing command action can be inputted via an individual user action.

In particular, in case of receiving a touch action on a specific object, both of the selection action and the 3D processing command action for the specific object can be inputted. Alternatively, in case of receiving a touch action on a specific object, the specific object is selected. In case of relieving a touch & drag action (or a proximity touch & drag action) from a first point to a second point (e.g., the specific object can be included between the first point and the second point) from a user, the 3D processing command action for the selected specific object can be inputted.

As a component for receiving an input of the selection action or the 3D processing command action for the specific object, the mobile terminal 100 can include at least one of a touchpad, a touchscreen, a motion sensor, a proximity sensor, a camera, a wind detecting sensor and the like. In particular, the proximity sensor can include at least one of an ultrasonic proximity sensor, an inductive proximity sensor, a capacitance proximity sensor, an eddy current proximity sensor and the like.

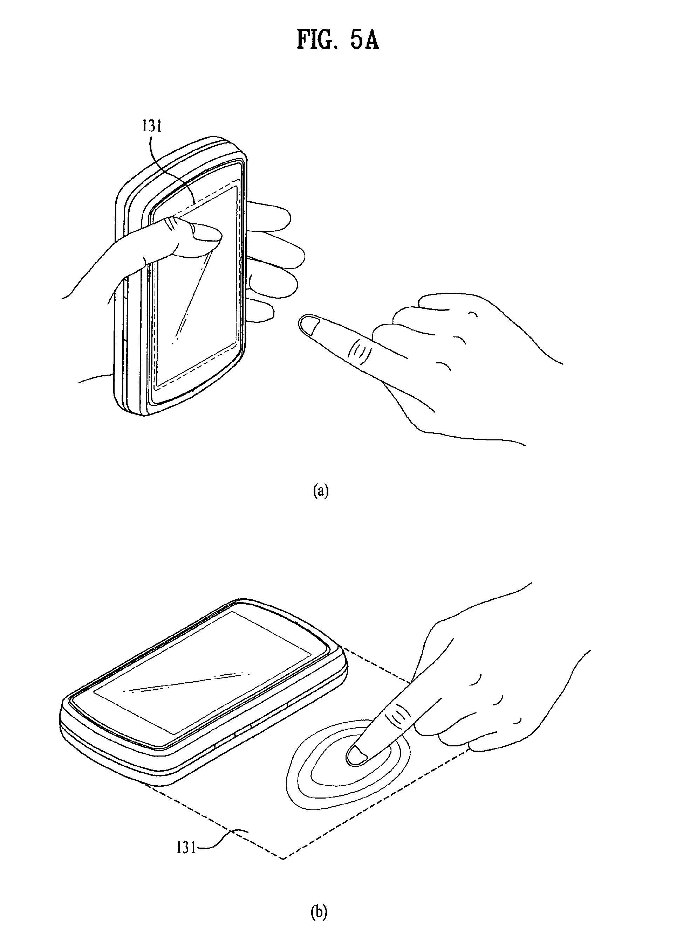

In the following description, a process for inputting a selection action or a 3D processing command action for a specific object per component for receiving an input of the selection action or the 3D processing command action is explained in detail with reference to FIGs. 5A to 5E.

FIGs. 5A to 5E are diagrams of a process for inputting a selection action on a specific object according to the present invention.

FIG. 5A shows a state of receiving an input of a user's selection action or a user's 3D processing command action using an ultrasonic sensor.

In FIG. 5A, the ultrasonic sensor is an example of a motion sensor. The ultrasonic sensor is able to receive a user motion within a predetermined distance (e.g., 2~5 cm) from an ultrasonic sensor using a reflective wave of an ultrasonic waveform. And, the ultrasonic sensor uses an absolute coordinates input system via 3D coordinates sensing in a space.

Referring to FIG. 5A (a), the ultrasonic sensor 131 is arranged around the display unit 151 to detect a user action on a front side of the display unit 151. And, the ultrasonic sensor 131 is able to recognize the detected user action as a selection action or a 3D processing command action.

Referring to FIG. 5A (b), the ultrasonic sensor 131 is provided to a lateral side of the display unit 151 to detect a user action in a lateral direction of the display unit 151. And, the ultrasonic sensor 131 is able to recognize the detected user action as a selection action or a 3D processing command action.

Since a user action in FIG. 5A is performed on a specific object, if the user action is inputted, it is able to identifiably display the specific object corresponding to the inputted user action.

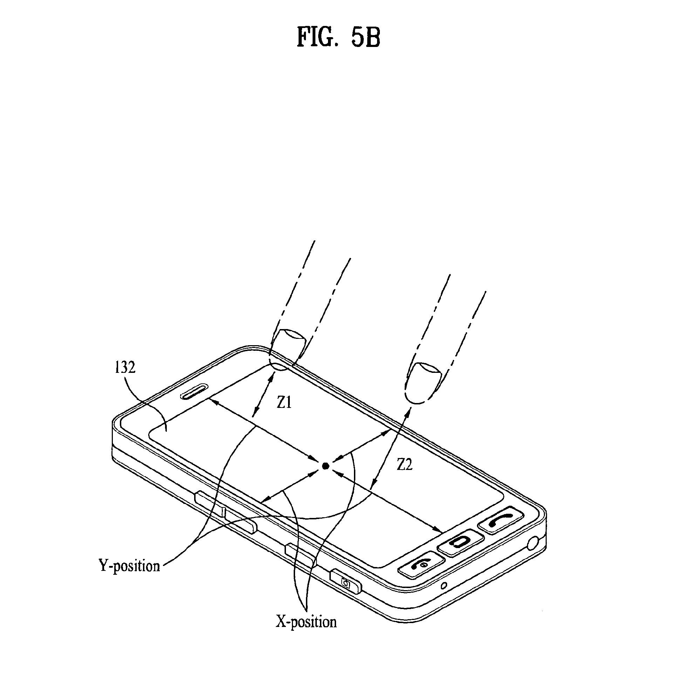

FIG. 5B shows a state of receiving an input of a user's selection action or a user's 3D processing command action using a proximity touchscreen.

The detailed configuration of the proximity touchscreen refers to FIG. 3.

Referring to FIG. 5B, a proximity touchscreen 132 plays a role as the display unit 151 and also detects a user proximity touch action on the proximity touchscreen 132 to recognize the detected user proximity touch action as a selection action or a 3D processing command action.

In this case, the user proximity touch action is performed on a specific object. And, the specific object selected by the user proximity touch action can be identifiably displayed.

Moreover, the mobile terminal is able to set a selection range of the specific object to differ according to a proximity touch distance. For instance, the shorter the proximity touch distance gets, the smaller the number of the selected objects or a size of the selected object becomes.

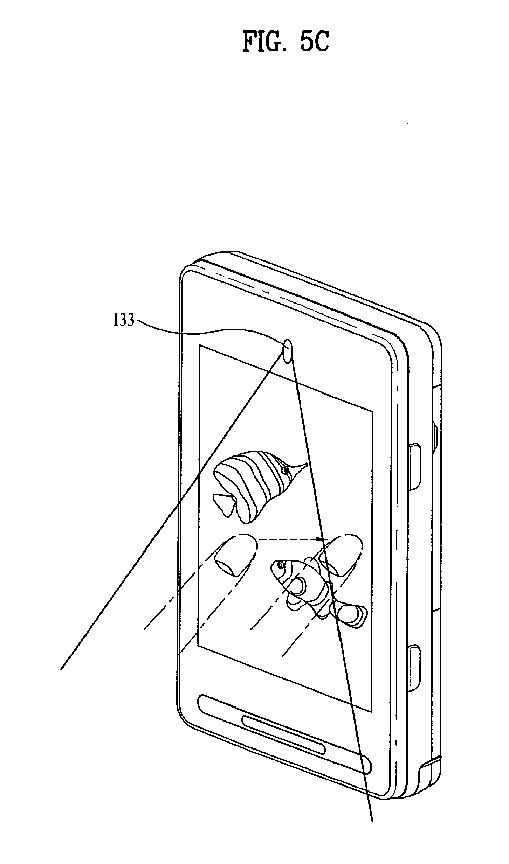

FIG. 5C shows a state of receiving an input of a user's selection action or a user's 3D processing command action using a camera.

In this case, the camera shown in FIG. 5C can include the former camera 121 shown in FIG. 1 or can be separately provided for the selection action.

Referring to FIG. 5C, a camera 133 receives an input of an image including a user action on a specific object and is then able to recognize the user action included in the inputted image as a selection action or a 3D processing command action.

In this case, the mobile terminal 100 is able to identifiably display the specific object selected by the user action included in the image inputted via the camera 133.

When a user inputs a selection action on a specific object, in order for the user to check the specific object selected to correspond to the inputted selection action, both of the camera 133 and the display unit 151 can be provided to the same plane.

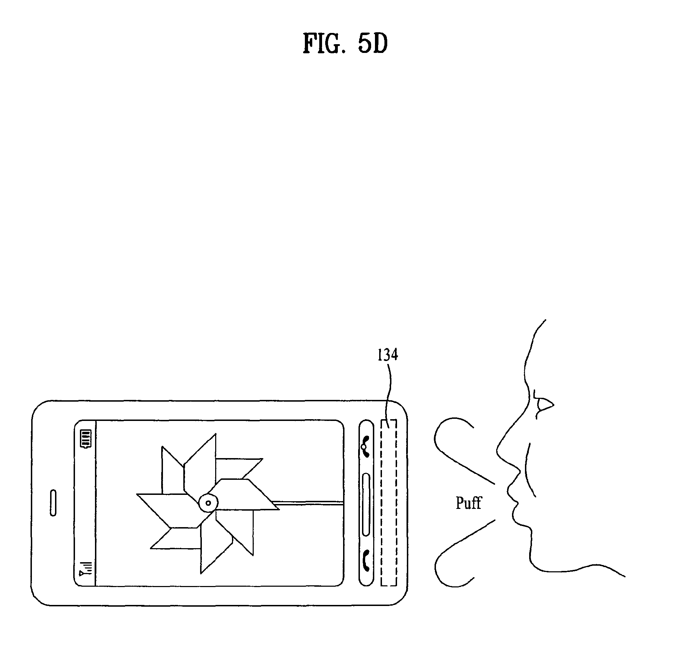

FIG. 5D shows a state of receiving an input of a user's selection action or a user's 3D processing command action using a wind detecting sensor.

In this case, the wind detecting sensor can be provided to a microphone/earphone or a speaker. If a user puffs out to the microphone, earphone or speaker, the wind detecting sensor is able to recognize the strength or duration of the corresponding wind. Specifically, the wind detecting sensor is able to use the wind puffed by the user in a manner of removing noise from the wind.

Referring to FIG. 5D, a wind detecting sensor 134 is provided below the display unit 151. If the wind detecting sensor 134 detects a wind puffed out by a user, the wind detecting sensor 134 is able to recognize a corresponding selection action or a corresponding 3D processing command action.

In this case, it is able to identifiably display a specific object selected by the inputted puff action.

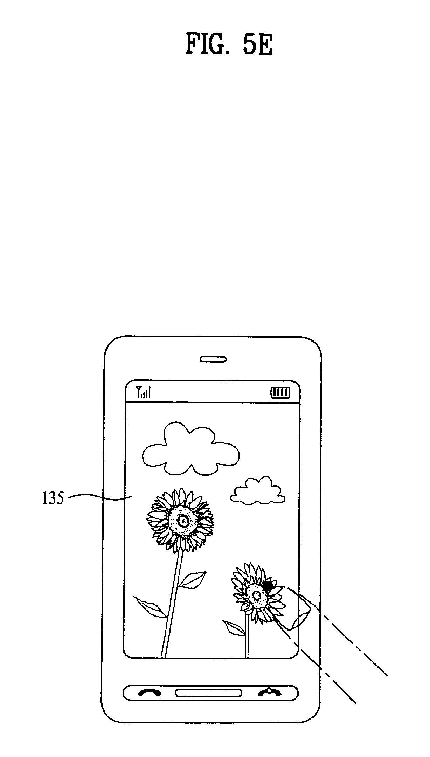

FIG. 5E shows a state of receiving an input of a user's selection action or a user's 3D processing command action using a touchscreen.

Referring to FIG. 5E, the mobile terminal 100 is able to directly receive an input of a user touch action on a specific object in a first image displayed on the touchscreen 135. And, the mobile terminal 100 is able to recognize the user touch action as a selection action or a 3D processing command action.

Referring now to FIG. 4, the mobile terminal 100 performs a screen effect processing on the specific object selected in the selecting step S420 under the control of the controller 180 [S430].

Moreover, in the performing step S430, the mobile terminal is able to perform a 3D processing on the specific object selected in the selecting step S420 under the control of the controller 180.

The screen effect processing is described as follows.

First of all, the screen effect processing means that an image part corresponding to the specific object is edited. For instance, the screen effect processing can include at least one of a zoom-in/out, a shaking, a position shift, a figure modification, a color change and the like for the specific object.

In the performing step S430, the mobile terminal 100 is able to perform a different screen effect processing according to a type of a selection action for a specific object. For instance, in case of receiving an input of a touch & drag action from a specific object in the first image to a prescribed point as a selection action, the mobile terminal 100 is able to shift the specific object to the prescribed point. For another instance, in case of receiving an input of a puff action to a specific object in the first image as a selection action, the mobile terminal 100 is able to shake the specific object.

Secondly, the 3D processing is explained as follows.

In this case, the 3D processing can mean to process an image part corresponding to a specific object 3-dimensionally. For instance, if a specific object is 3-dimensionally processed, the specific object can be displayed in a manner of being projected or recessed more than the rest of the image except the specific object.

In the performing step S430, the mobile terminal 100 is able to set a 3D display level for a specific object. In this case, the 3D display level is randomly set by the controller, is set by a user's direction selection, or can be set to correspond to a type of a 3D processing command action.

In this case, the 3D display level can mean a projected or recessed extent of an image or object in displaying the image or the object included in the image (hereinafter the image or the object shall be called an object). For instance, a specific image or object can be displayed in a manner of being projected or recessed in a predetermined distance according to a corresponding 3D display level. Therefore, the 3D display level can include a 3D projected display level and a 3D recessed display level.

In particular, a plurality of projected or recessed distances can be differently set in a plurality of 3D display levels, respectively. Fir instance, a first 3D projected display level is set to a projected distance d, a second 3D projected display level is set to a projected distance 2d, and a first 3D recessed display level is set to a recessed distance d.

In the performing step S430, the mobile terminal 100 is able to perform a different 3D processing according to a type of a 3D processing command action for a specific object.

In particular, a 3D display level of a specific object can be set different according to an extent or strength of a 3D processing command action.

For instance, in case of receiving an input of a touch action lasting for a first touch duration for a specific object, the specific object is displayed in a manner of being projected by a first distance. For another instance, in case of receiving an input of a touch action lasting for a second touch duration for a specific object, the specific object is displayed in a manner of being projected by a second distance. For another instance, in case of receiving an input of a puff having a first strength for a specific object, the specific object is displayed in a manner of being recessed by a first distance. For further instance, in case of receiving an input of a puff having a second strength for a specific object, the specific object is displayed in a manner of being recessed by a second distance.

Moreover, it is able to set a 3D projected display level or a 3D recessed display level for a specific object according to an input pattern of a 3D processing command action.

For instance, in case of receiving an input of a touch & drag action in a right direction for a specific object, it is able to display the specific object in a manner that the specific object is projected. For instance, in case of receiving an input of a touch & drag action in a left direction for a specific object, it is able to display the specific object in a manner that the specific object is recessed.

The mobile terminal 100 displays the first image, in which the specific object having the screen effect processing applied thereto in the performing step S430 is included, via the display unit 151 under the control of the controller 180 [S440].

Therefore, by the screen effect processing, the first image displayed in the former displaying step S410 and the first image displayed in the latter displaying step S440 can be identical to each other except the image part of the specific object to which the screen effect processing is applied.

Moreover, in the displaying step S440, the mobile terminal 100 s able to display the first image including the specific object, to which the 3D processing performed in the performing step S430 is applied, via the display unit 151 under the control of the controller 180.

Therefore, by 3D processing, the first image displayed in the former displaying step S410 and the first image displayed in the latter displaying step S440 can be identical to each other except the image part of the specific object to which the 3D processing is applied.

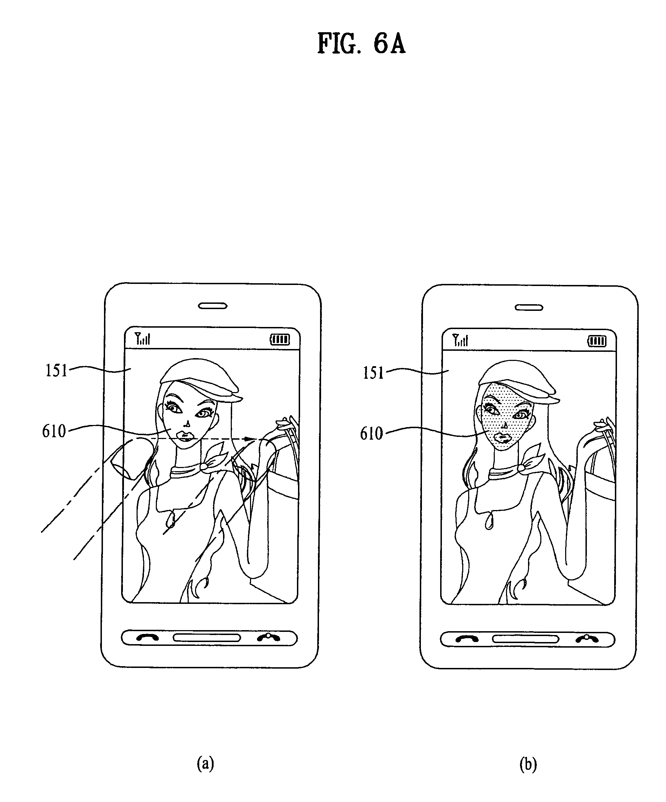

In the following description, a screen effect processing on a specific object is explained in detail per selection action with reference to FIGs. 6A to 6E.

FIGs. 6A to 6E are diagrams of specific objects on which a screen effect processing according to the present invention is performed.

FIG. 6A shows a screen effect processing according to a selection action inputted using the ultrasonic sensor 131.

Referring to FIG. 6A, in case of receiving an input of a user action in a first direction for a specific object 610 included in a first image in a space using the ultrasonic sensor 131 [a], the mobile terminal 100 is able to change a color of the specific object 610 [b].

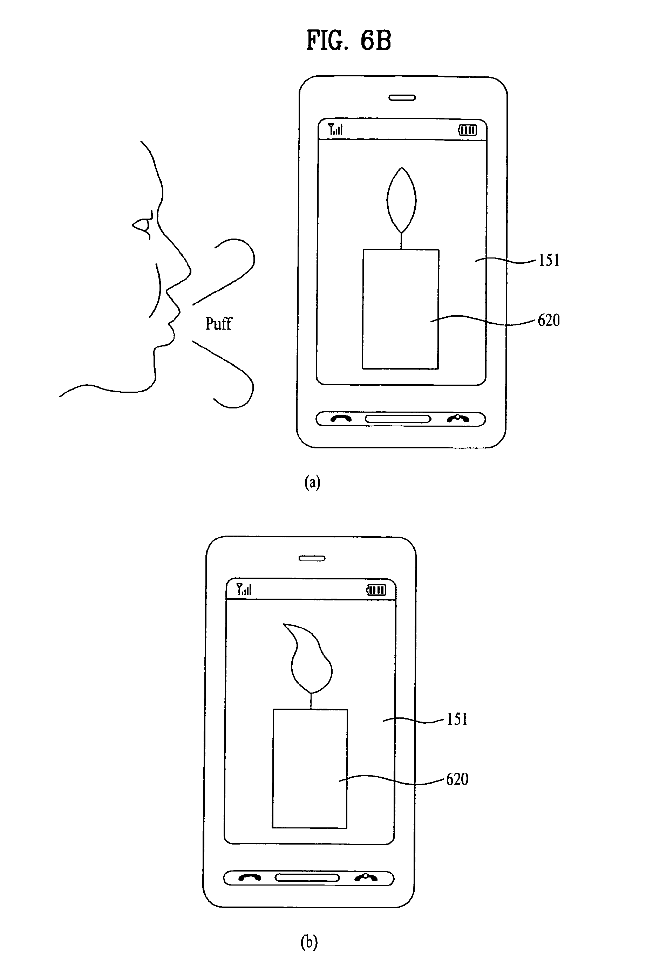

FIG. 6B shows a screen effect processing according to a selection action inputted using the wind detecting sensor 134.

Referring to FIG. 6B, in case of receiving an input of a puff (or a wind) from a user for a specific object 620 included in a first image using the wind detecting sensor 134 [a], the mobile terminal 100 is able to display the specific object 620 in a manner that the specific object 620 is shaken [b].

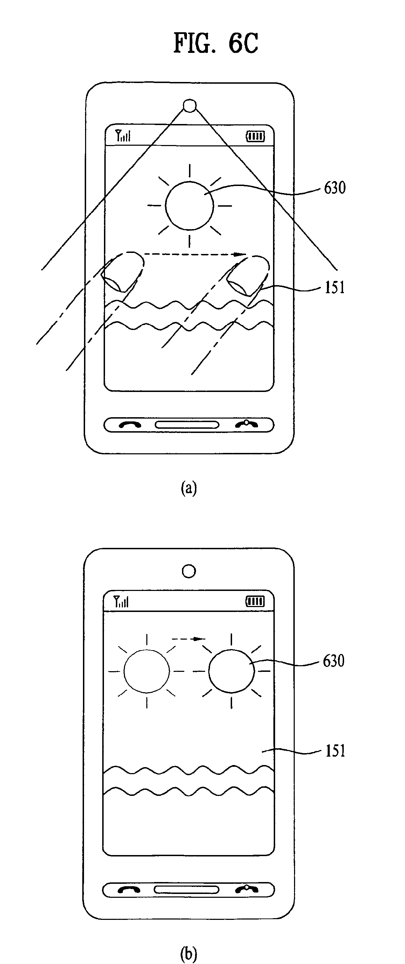

FIG. 6C shows a screen effect processing according to a selection action inputted using the camera 133.

Referring to FIG. 6C, in case of receiving an input of an image including a user action in a first direction for a specific object 630 included in a first image via the camera 133 [a], the mobile terminal 100 is able to shift the specific object 630 in the first image in the first direction [b].

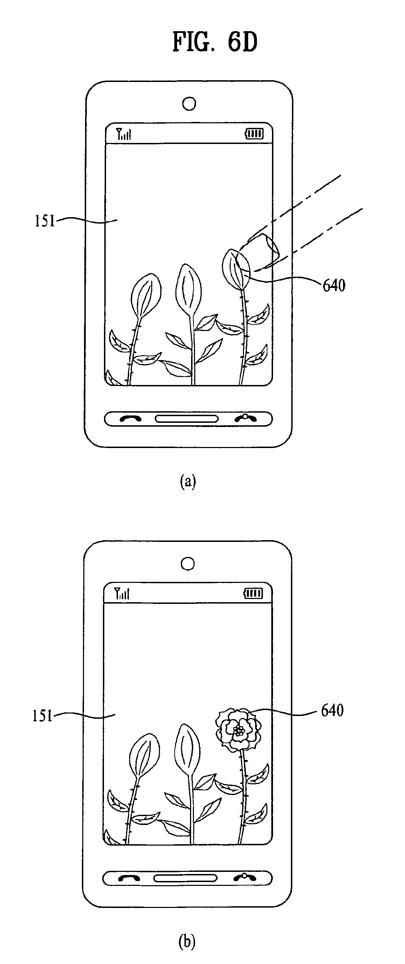

FIG. 6D shows a screen effect processing according to a selection action inputted using the touchscreen 135.

Referring to FIG. 6D, in case of receiving an input of a user touch action on a specific object 640 included in a first image displayed on the touchscreen 135 [a], the mobile terminal 100 is able to modify a shape of the specific object 640 [b].

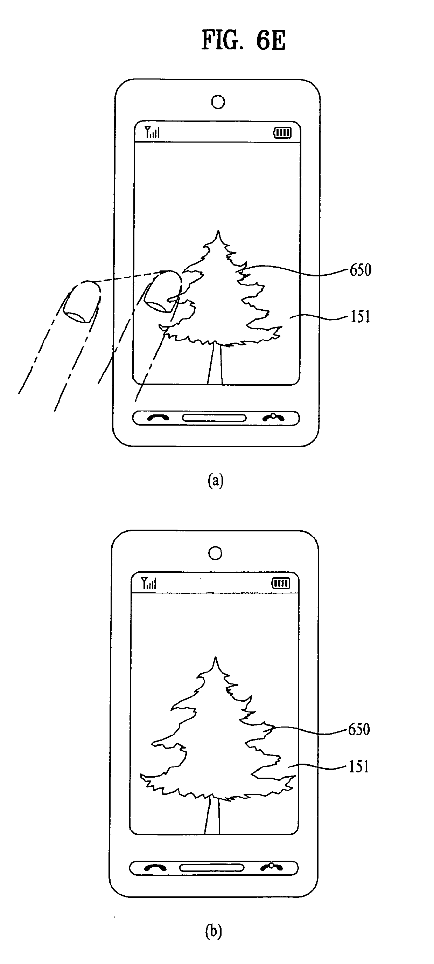

FIG. 6E shows a screen effect processing according to a selection action inputted using the proximity touchscreen 132.

Referring to FIG. 6E, in case of receiving an input of a proximity touch action (in a direction of decreasing a proximity distance) on a specific object 650 included in a first image via the proximity touchscreen 132 [a], the mobile terminal 100 is able to enlarge a size of the specific object 650 [b]. On the contrary, in case of receiving an input of a proximity touch action (in a direction of increasing a proximity distance) on a specific object 650 included in a first image via the proximity touchscreen 132, the mobile terminal 100 is able to reduce a size of the specific object 650 [b].

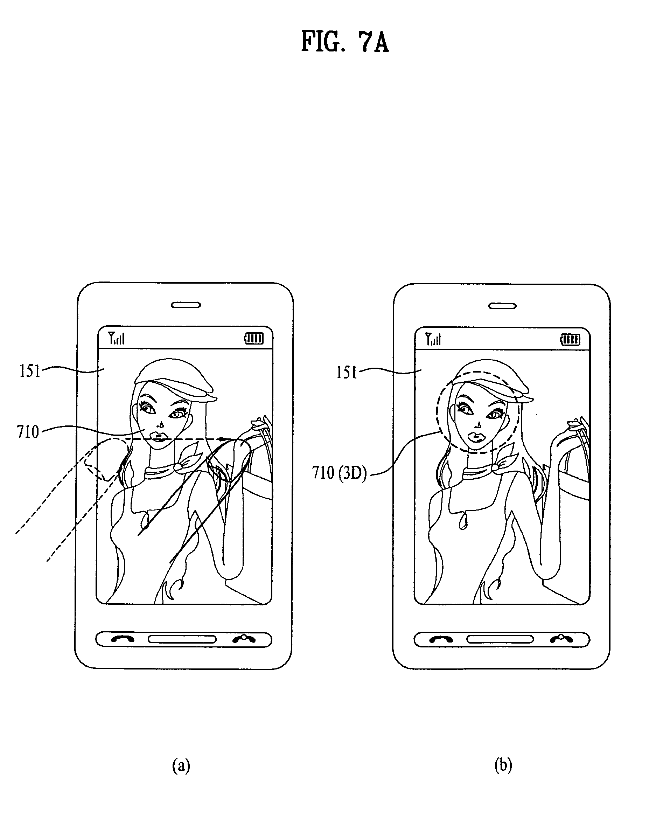

In the following description, a 3D processing for a specific object is explained in detail per selection action and 3D processing command action with reference to FIGs. 7A to 7E.

FIGs. 7A to 7E are diagrams of specific objects on which a 3D processing according to the present invention is performed.

FIG. 7A shows a 3D processing according to a selection action and 3D processing command action inputted using the ultrasonic sensor 131.

Referring to FIG. 7A, in case of receiving an input of a user action in a first direction for a specific object 710 included in a first image in a space using the ultrasonic sensor 131 [a], the mobile terminal 100 is able to 3-dimensionally display the specific object 710 [b].

In particular, a 3D display level having a large projected or recessed extent can be set in proportion to a speed of the user action in the first direction.

In case that the user action is performed in the first direction, the specific object 710 is projected and displayed. In case that the user action is performed in a second direction opposite to the first direction for example, the specific object 710 is recessed and displayed.

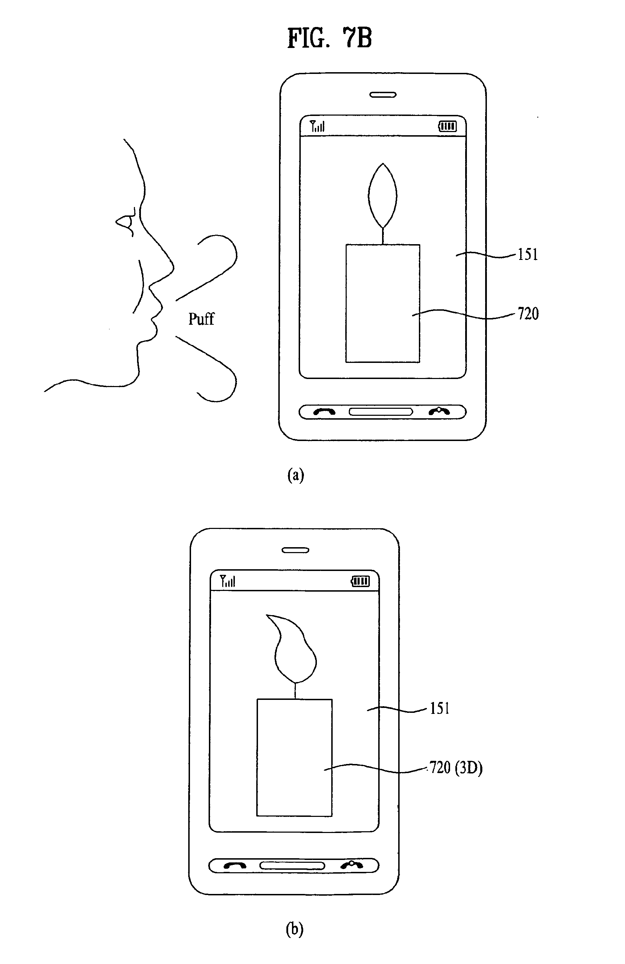

FIG. 7B shows a 3D processing according to a selection action and 3D processing command action inputted using the wind detecting sensor 134.

Referring to FIG. 7B, in case of receiving an input of puff (or a wind) from a user for a first image using the wind detecting sensor 134 [a], the mobile terminal 100 is able to display a specific object 720 included in the first image in a manner that the specific object 720 is shaken [b].

Moreover, in case that a plurality of objects are included in the first image, the mobile terminal 100 is able to separately receive an input of a selection action (e.g., a touch action) for the specific object 720.

In particular, in case of receiving an input of a user puff having a first strength, the mobile terminal displays the specific object 720 in a manner that the specific object 720 is recessed or projected by a first distance. In case of receiving an input of a user puff having a second strength, the mobile terminal displays the specific object 720 in a manner that the specific object 720 is recessed or projected by a second distance.

Of course, the mobile terminal 100 is able to increase an extent of shaking the specific object 720 in proportion to the strength of the user puff.

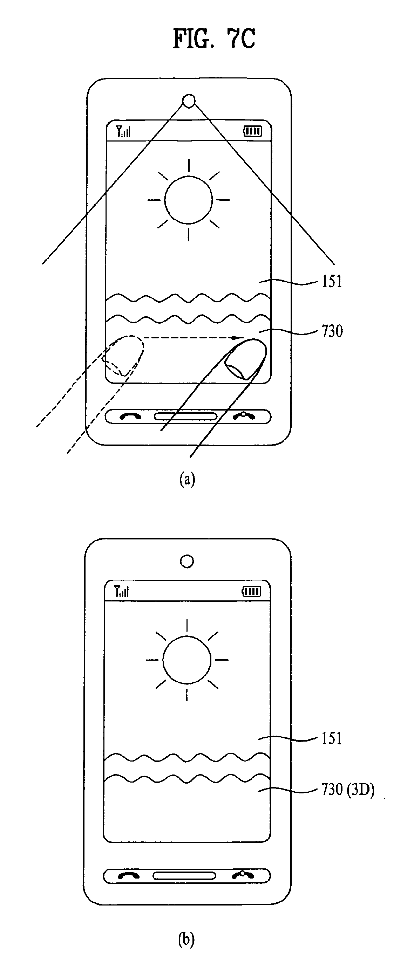

FIG. 7C shows a 3D processing according to a selection action and 3D processing command action inputted using the camera 133.

Referring to FIG. 7C, in case of receiving an input of an image including a user action in a first direction for a specific object 730 included in a first image via the camera 133 [a], the mobile terminal 100 is able to 3-dimensionally display the specific object 730 in the first image [b].

For instance, in case that the specific object 730 is a wave, the mobile terminal 100 is able to display the specific object 730 in a manner that the specific object 730 of the wave rises and falls.

In particular, a 3D display level having a projected or recessed extent is set for the specific object 730 to increase in proportion to a speed of the user action in the first direction or a rising and falling extent of the specific object 730 can be set to increase in proportion to the speed of the user action in the first direction.

In case that the user action is performed in the first direction, the specific object 730 is projected and displayed. In case that the user action is performed in a second direction opposite to the first direction for example, the specific object 730 is recessed and displayed.

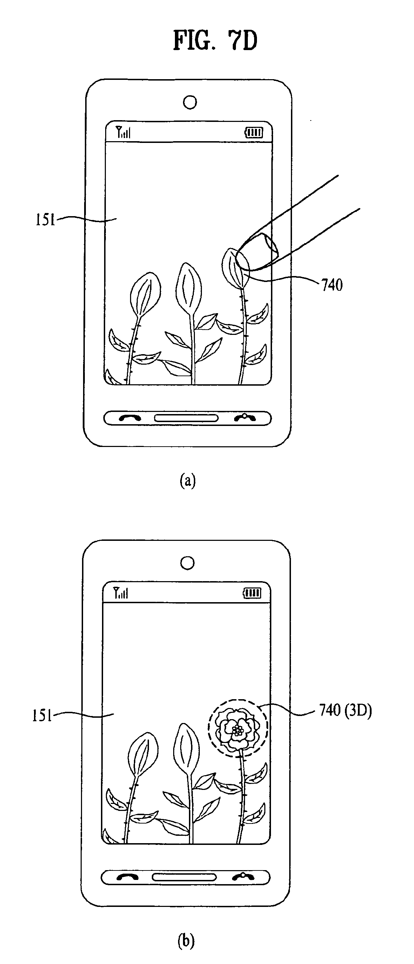

FIG. 7D shows a 3D processing according to a selection action and 3D processing command action inputted using the touchscreen 135.

Referring to FIG. 7D, in case of receiving an input of a user touch action on a specific object 740 included in a first image displayed on the touchscreen 135 [a], the mobile terminal 100 is able to display the specific object 740 3-dimensionally [b].

In particular, the specific object 740 can be 3-dimensionally displayed in a manner that a projected or recessed extent of the specific object 740 increases in proportion to a touch duration for the specific object 740, a touch pressure on the specific object 740 or the number of touches to the specific object 740.

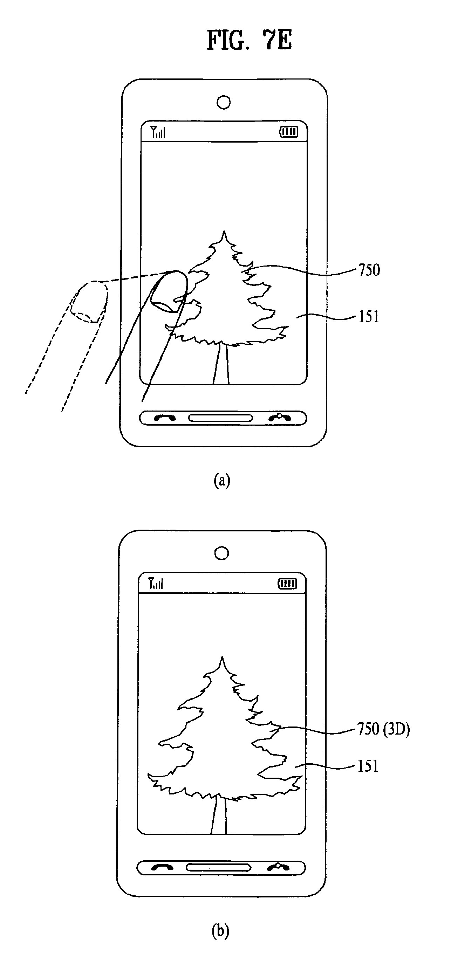

FIG. 7E shows a 3D processing according to a selection action and 3D processing command action inputted using the proximity touchscreen 132.

Referring to FIG. 7E, in case of receiving an input of a proximity touch action (in a direction of decreasing a proximity distance) on a specific object 750 included in a first image via the proximity touchscreen 132 [a], the mobile terminal 100 is able to 3-dimensionally display the specific object 750 [b].

In particular, the mobile terminal 100 is able to display the specific object 750 in a manner of increasing a projected or recessed extent of the specific object 750 in proportion to a proximity distance from the specific object 750.

Moreover, in case of receiving an input of a proximity touch action for decreasing a proximity distance from the specific object 750, the mobile terminal 100 projects and displays the specific object 750 (i.e., a projected extent increases in inverse proportion to a proximity distance). In case of receiving an input of a proximity touch action for increasing a proximity distance from the specific object 750, the mobile terminal 100 recesses and displays the specific object 750 (i.e., a recessed extent increases in proportion to a proximity distance).

Referring now to FIG. 4, the mobile terminal 100 performs the screen effect processing or the 3D processing on a specific part of the specific object under the control of the controller 180 [S430] and is then able to display a first image including the specific part on which the screen effect processing or the 3D processing is performed [S440].

For instance, if the specific object is a human face and the specific part is a nose, eye or mouth of the human face, the mobile terminal 100 is able to perform the screen effect processing or the 3D processing on the nose, eye or mouth of the human face. In doing so, the mobile terminal is able to identify the specific part from the specific object under the control of the controller 180.

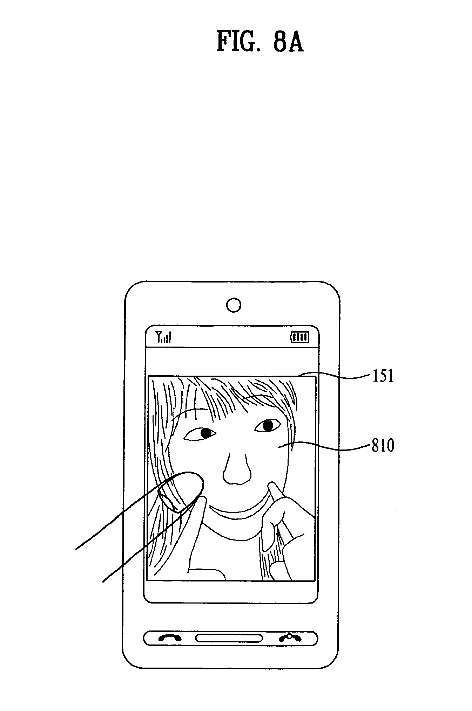

In the following description, a screen effect processing or a 3D processing for a specific part of a specific object is explained in detail with reference to FIGs. 8A to 8E.

FIGs. 8A to 8E are diagrams for performing a screen effect processing or a 3D processing on a specific part of a specific object according to the present invention.

Referring to FIG. 8A, the mobile terminal 100 is able to receive a selection action for a specific object 810 while a first image including the specific object 810 is displayed.

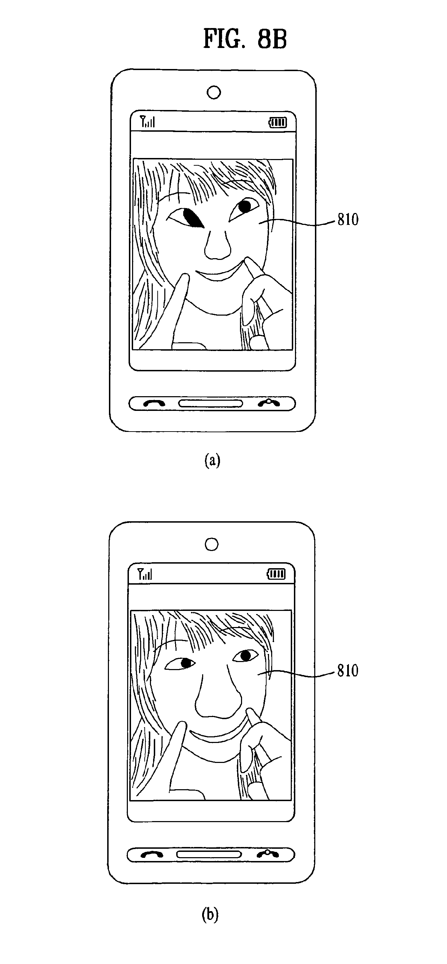

Referring to FIG. 8B, if the specific object 810 is selected, the mobile terminal performs a convex lens effect on the specific object 810 [a] or is able to perform a concave lens effect on the specific object 810 [b]. In this case, each of the convex and concave lens effects can differentiate a corresponding election action.

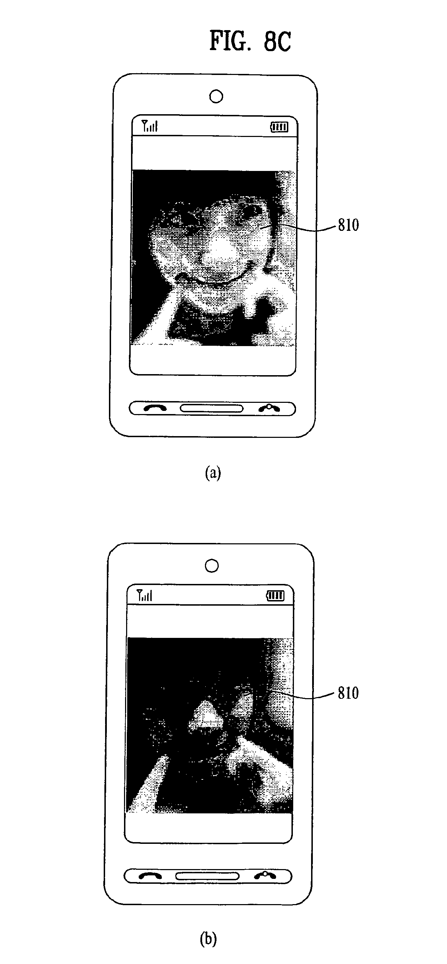

Referring to FIG. 8C, if the specific object 810 is selected, the mobile terminal performs an out-focusing effect on the specific object 810 [a] or is able to perform a fade-in effect on the specific object 810 [b]. In this case, each of the out-focusing and fade-in effects can differentiate a corresponding selection action.

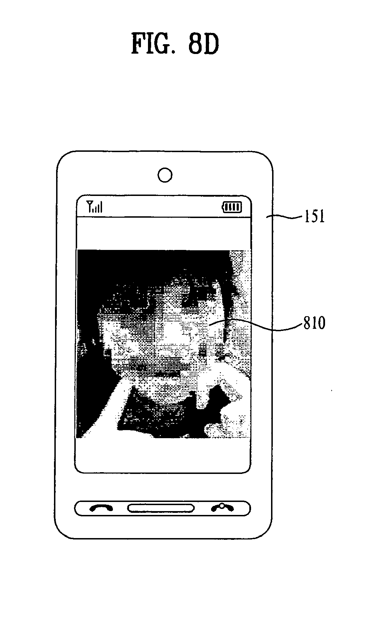

Referring to FIG. 8D, if the specific object 810 is selected, the mobile terminal 100 is able to perform a mosaic effect on the specific object 810.

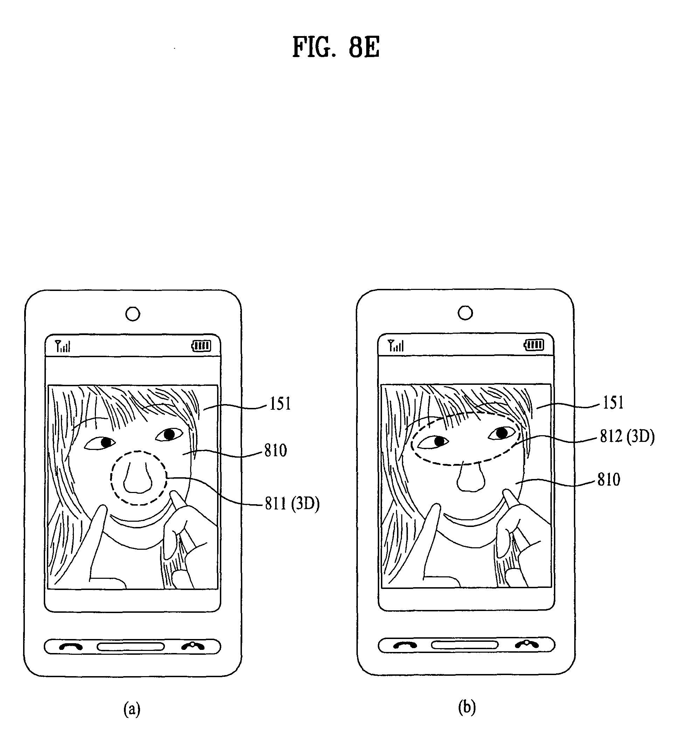

Referring to FIG. 8E, if the specific object 810 is selected, the mobile terminal 100 is able to perform a 3D processing on a first specific part (e.g., a nose) 811 of the specific object 810 [a] or is able to perform a 3D processing on a second part (e.g., an eye) of the specific object 810 [b].

In this case, a 3D recessed or projected processing can differentiate a selection action (e.g., a 3D processing command action included) for the specific object.

In FIG. 8A, the mobile terminal 100 is able to receive an input of a selection action for a specific part (e.g., an eye, a nose, etc.) of the specific object 810 to perform a 3D processing thereon. Moreover, if a plurality of 3D processing possible parts exist in the specific object 810, the mobile terminal 100 facilitates a user selection for a specific part in a manner of displaying the 3D processing possible parts identifiably in case of receiving an input of a selection action from a user.

Referring now to Fig. 4, the mobile terminal 100 generates at least one image, which includes a specific object having the screen effect processing or the 3D processing performed thereon to be separate from the first image in the performing step S430, and is then able to display the generated at least one image as an auxiliary image of the first image in the displaying step S440.

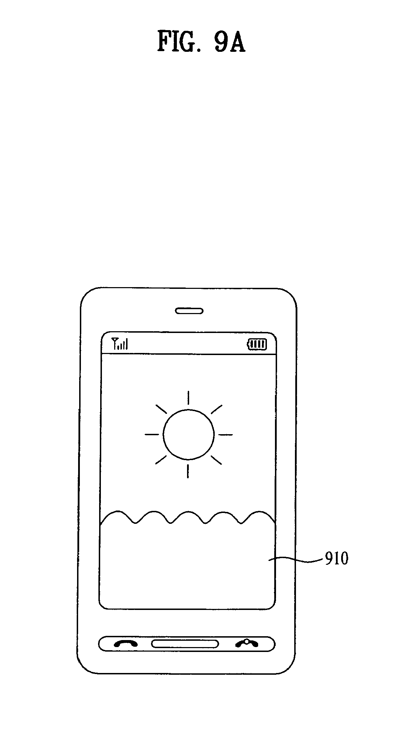

This is explained in detail with reference to FIGs. 9A to 10D as follows.

FIGs. 9A to 10D are diagrams of a plurality of auxiliary images including a specific object on which a screen effect processing or a 3D processing is performed according to the present invention.

First of all, the mobile terminal 100 displays a first image including a specific object (hereinafter named a wave) 910 on the screen [FIG. 9A].

In case of receiving an input of a selection action for the wave 910 in FIG. 9A, the mobile terminal 100 is able to generate a plurality of auxiliary images 901 to 903 in which the screen effect processing is performed on the wave 910.

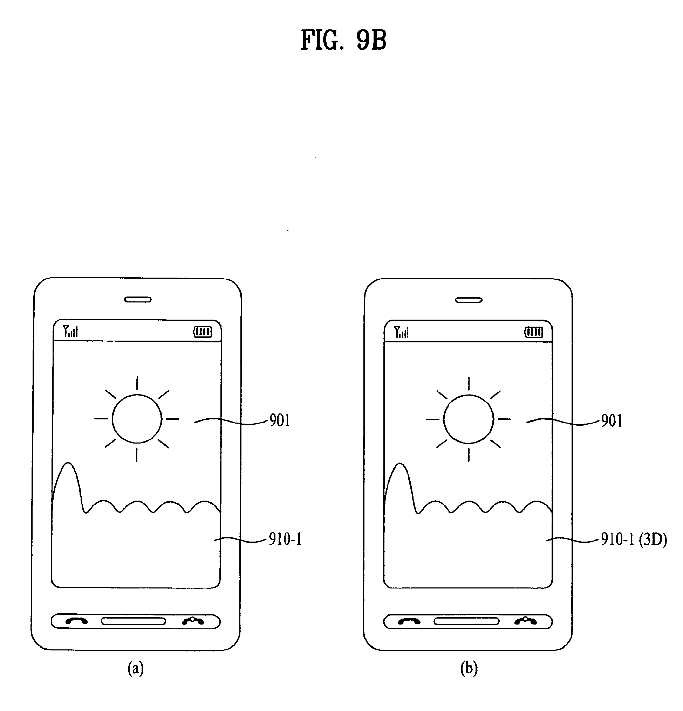

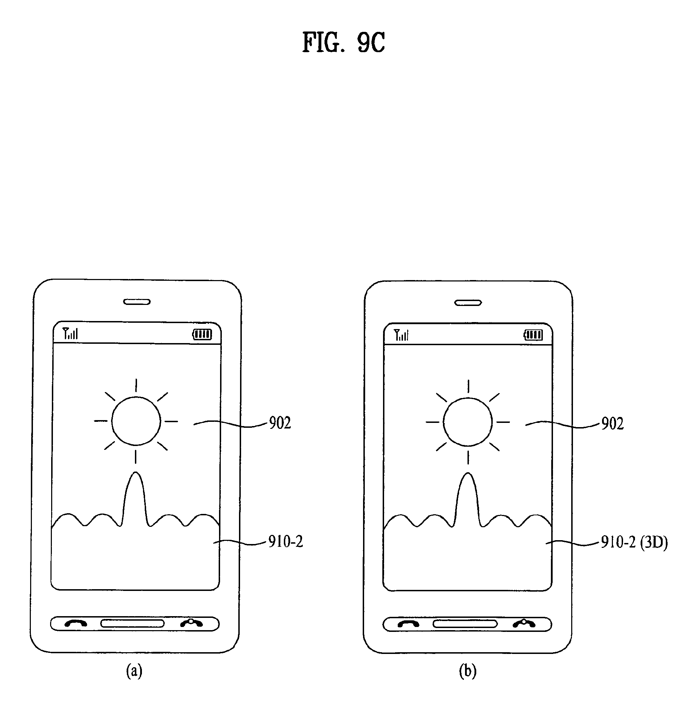

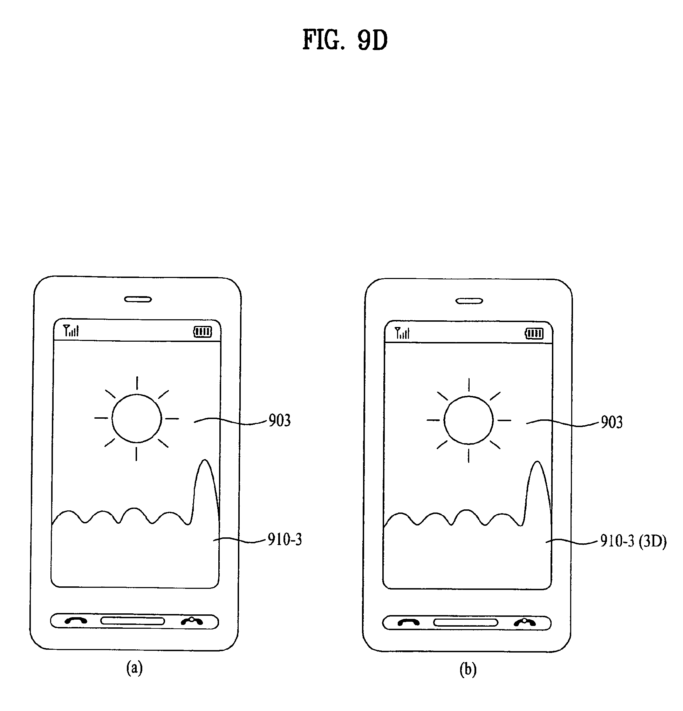

For instance, a plurality of the auxiliary images 901 to 903 can include an image, in which a head part 910-1 of the wave 910 rises, [FIG. 9B (a)], an image, in which a middle part 910-2 of the wave 910 rises, [FIG. 9C (a)], and an image, in which a tail part 910-3 of the wave 910 rises, [FIG. 9D (a)].

Moreover, in case of receiving an input of a 3D processing command action together with the selection action for the wave 910 in FIG. 9A, the mobile terminal 100 is able to generate a plurality of auxiliary images 901 to 903 in which the 3D processing is performed on the wave 910.

For instance, a plurality of the auxiliary images 901 to 903 can include an image, in which a head part 910-1 of the wave 910 rises 3-dimensionally, [FIG. 9B (b)], an image, in which a middle part 910-2 of the wave 910 rises 3-dimensionally, [FIG. 9C (b)], and an image, in which a tail part 910-3 of the wave 910 rises 3-dimensionally, [FIG. 9D (b)].

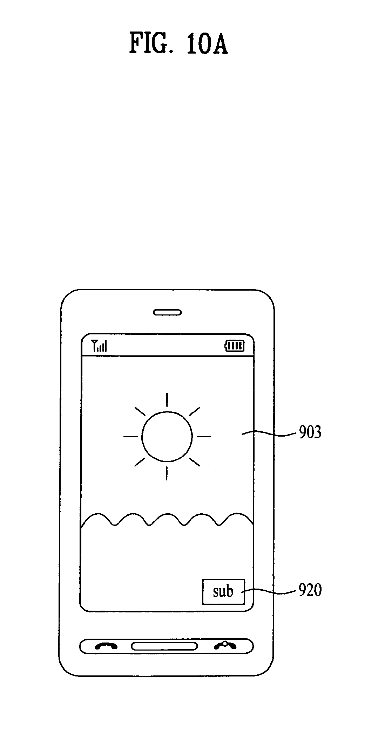

Referring to FIG. 10A, in case that the generation of a plurality of the auxiliary images is completed, the mobile terminal 100 displays a first image on the screen and is also able to display a key zone 920 for receiving a command for an auxiliary image display.

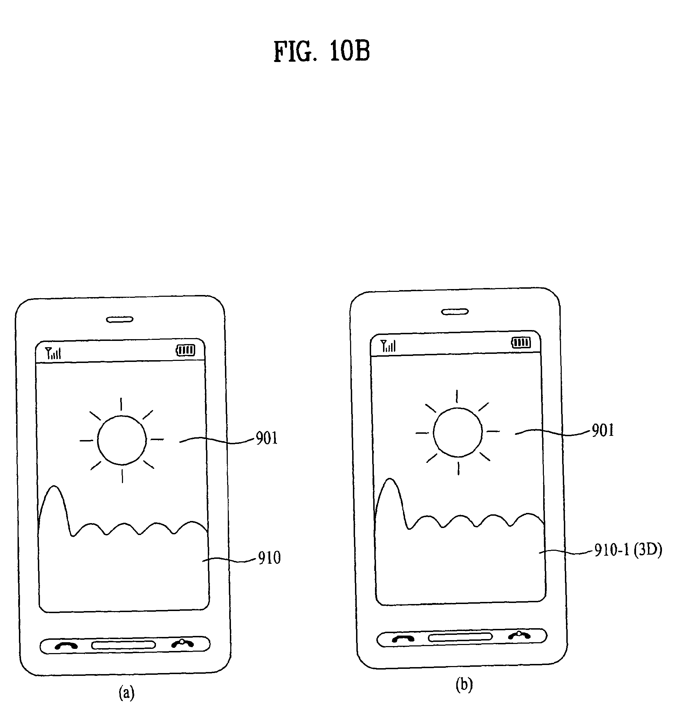

Referring to FIG. 10B, if a user selects the key zone 920 in FIG. 10A, the mobile terminal 100 is able to sequentially display a plurality of the generated auxiliary images 901 to 903.

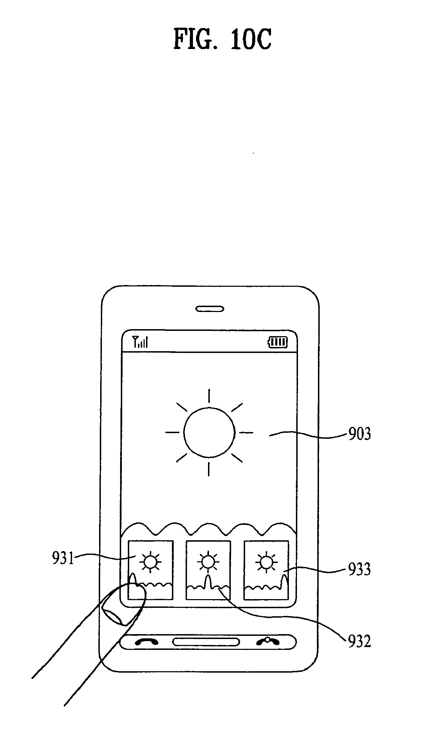

Referring to FIG. 10C, in case that the generation of a plurality of the auxiliary images is completed, the mobile terminal 100 displays a first image on the screen and is also able to display icons 931 to 933 respectively corresponding to the generated auxiliary images 901 to 903.

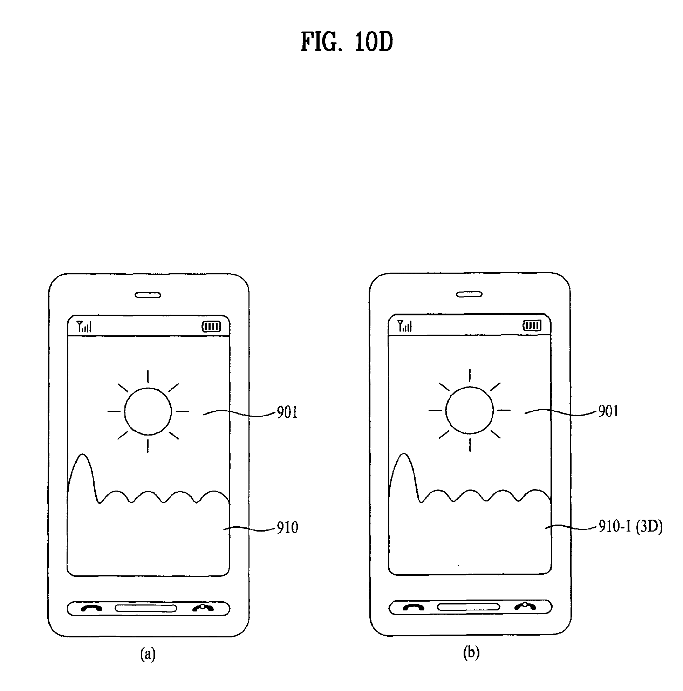

Referring to FIG. 10D, if a specific one 931 of the icons is selected in FIG. 10C, the mobile terminal 100 is able to display the auxiliary image 901 corresponding to the selected specific icon 931.

Referring now to FIG. 4, if the first image is a video including a plurality of still images, in which a first still image is included, the mobile terminal 100 receives an input of a selection action for a specific object included in the first still image via the user input unit 130 in the inputting step S420, extracts the specific object from each of a plurality of the still images, and is then able to perform the screen effect processing on the extracted specific object under the control of the controller 180 [S430]. And, the mobile terminal 100 is able to display a video constructed with a plurality of still images including the specific object having the screen effect processing performed thereon under the control of the controller 180 [S440].

Moreover, if the first image is a video including a plurality of still images, in which a first still image is included, the mobile terminal 100 receives inputs of a selection action and 3D processing command action for a specific object included in the first still image via the user input unit 130 in the inputting step S420, extracts the specific object from each of a plurality of the still images, and is then able to perform the 3D processing on the extracted specific object, under the control of the controller 180 [S430]. And, the mobile terminal 100 is able to display a video constructed with a plurality of still images including the specific object having the 3D processing performed thereon under the control of the controller 180 [S440].

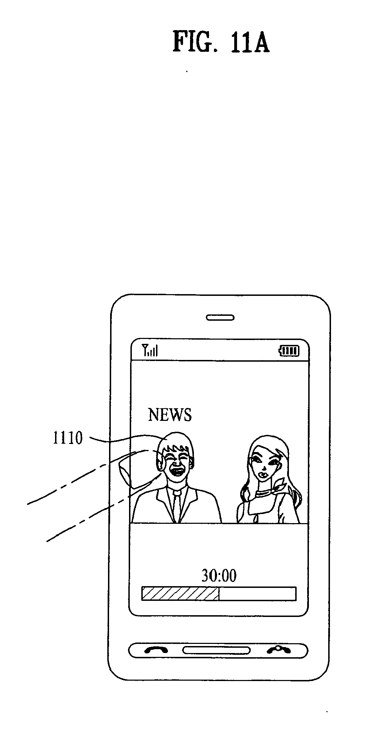

This is explained in detail with reference to FIGs. 11A to 11C as follows.

FIGs. 11A to 11C are diagrams for performing a screen effect processing or a 3D processing on a specific object included in a video according to the present invention.

Referring to FIG. 11A, while sequentially displaying a plurality of still images included in a video according to a video playback (example of a first image), the mobile terminal 100 is able to receive an input of a selection action for a specific object 1110 included in a first still image.

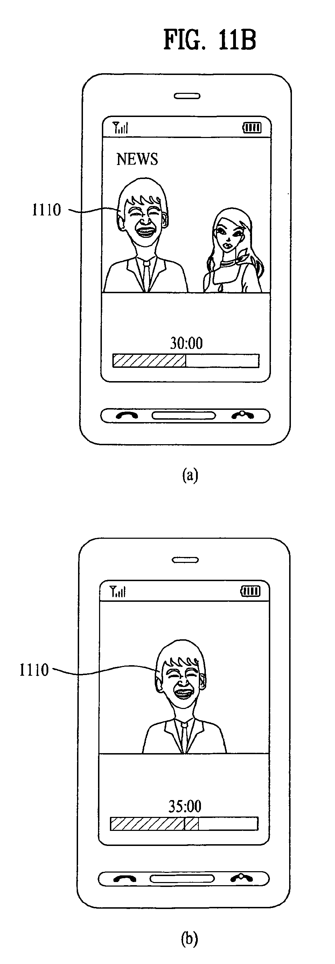

Referring to FIG. 11B, in case of relieving the input of the selection action for the specific object 1110, the mobile terminal 100 checks every still image including the specific object 1110 among a plurality of the still images and is then able to zoom in on the specific object 1110 included in the checked still image (example of the screen effect processing).

Therefore, in playing a video, when the still image including the specific object 1110 is displayed, the mobile terminal 100 is able to display the specific object 1110 in a manner of enlarging the specific object 1110.

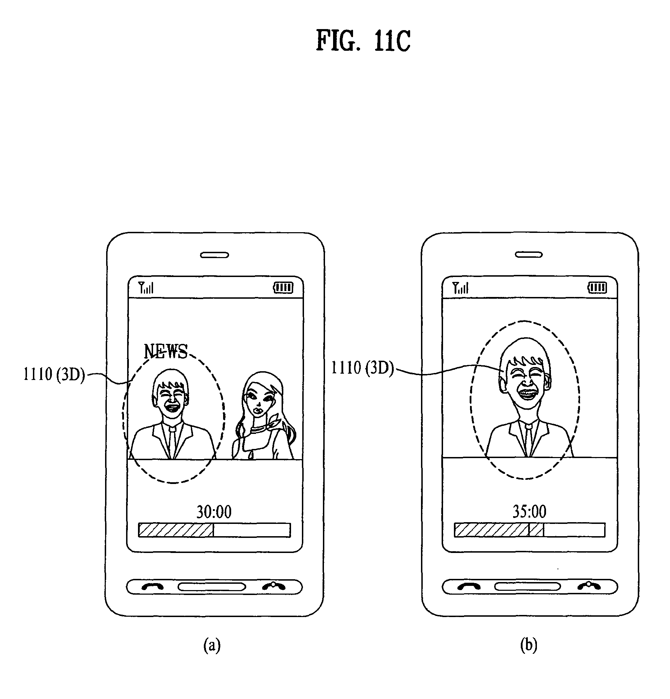

Referring to FIG. 11C, in case of receiving a further input of a 3D processing command action for the specific object 1110 in FIG. 11A, the mobile terminal checks every still image including the specific object 1110 among a plurality of the still images, extracts the specific object 1110 from the checked still image, and is then able to 3-dimensionally display the extracted specific object 1110.

In doing so, a projected or recessed extent of the specific object 1110 can be determined to correspond to an extent (e.g., a touch duration, a touch pressure, a touch count, etc.) of the touch action for selecting the specific object 1110. Moreover, the mobile terminal 100 is able to determine whether to display the specific object 1110 in a manner of projecting or recessing the specific object 1110 according to a user selection.

Therefore, in playing a video, the mobile terminal is able to 3-dimensionally display the specific object 1110 in case of displaying the still image including the specific object 1110.

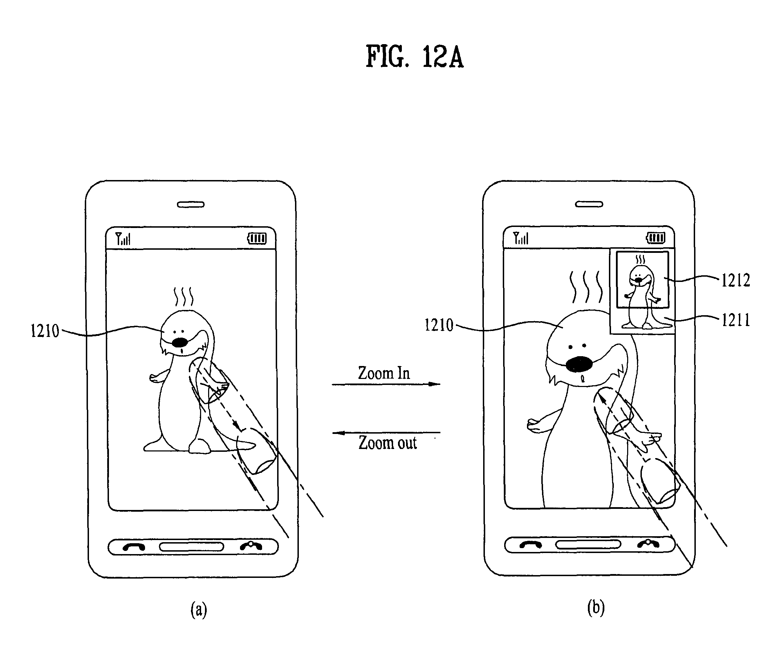

According to the present invention, the mobile terminal 100 receives an input of a control action for controlling a display if a first image from a user and is then able to control the display of the first image to correspond to the inputted control action under the control of the controller 180. This is explained in detail with reference to FIGs. 12A to 12H as follows.

FIGs. 12A to 12H are diagrams for controlling an image display corresponding to a control action on an image according to the present invention.

Referring to FIG. 12A, while displaying a first image, in case of receiving an input of a proximity touch action in a direction of decreasing a proximity distance using the proximity touchscreen 132, the mobile terminal 100 zooms in on the first image. In case of receiving an input of a proximity touch action in a direction of increasing a proximity distance using the proximity touchscreen 132, the mobile terminal 100 zooms out of the first image.

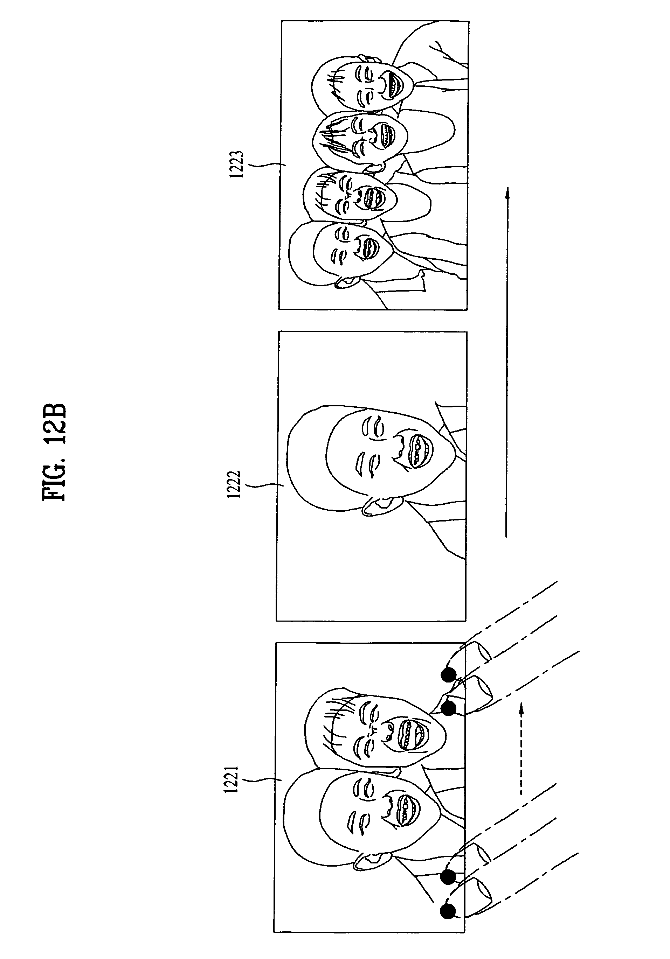

Referring to FIG. 12B, while displaying a first image, in case of receiving an input of a touch & drag action or a flicking action in a first direction using the touchscreen 135, the mobile terminal 100 is able to sequentially display images 1221 to 1223 in a folder including the first image.

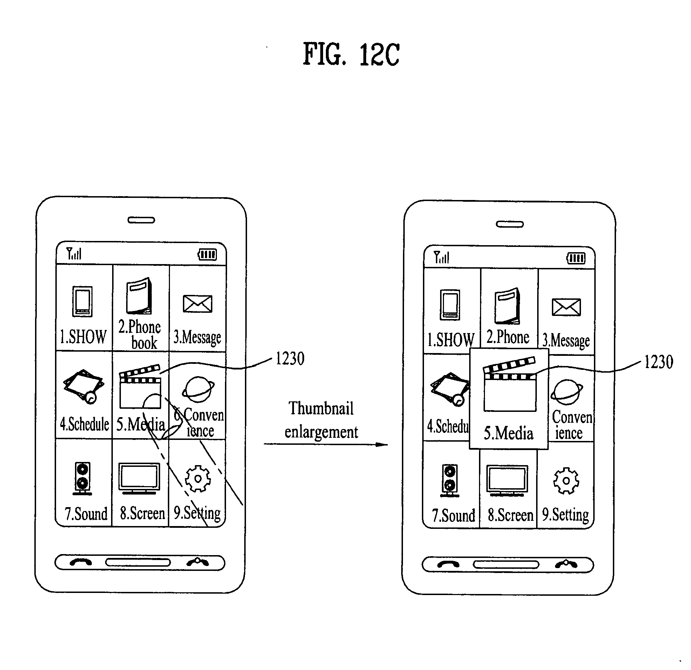

Referring to FIG. 12C, while displaying a plurality of menu items, in case of receiving an input of a touch action for a specific menu item 1230 using the touchscreen 135, the mobile terminal 100 is able to enlarge and display the specific menu item 1230.

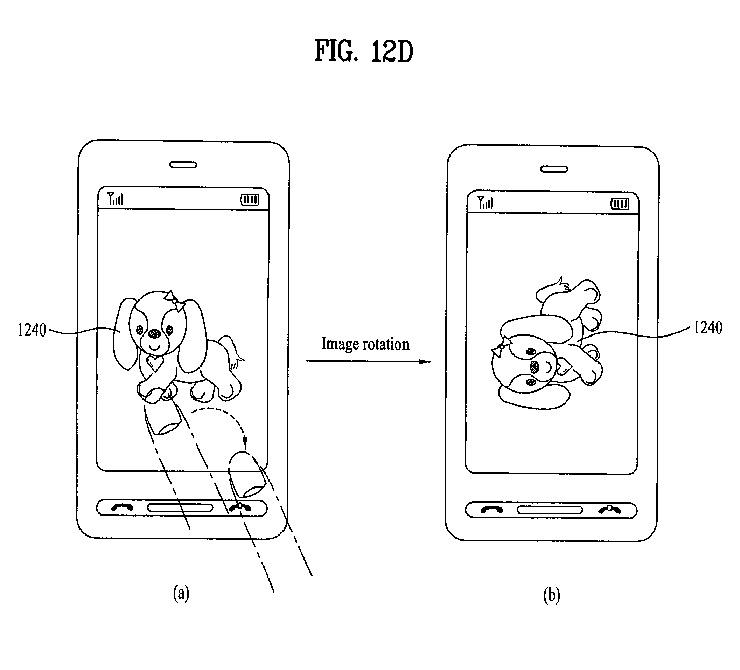

Referring to FIG. 12D, while displaying a first image, in case of receiving an input of an image including a user finger rotation action via the camera, the mobile terminal 100 is able to display the first image in a manner of rotating the first image in the rotation direction of the user finger rotation action.

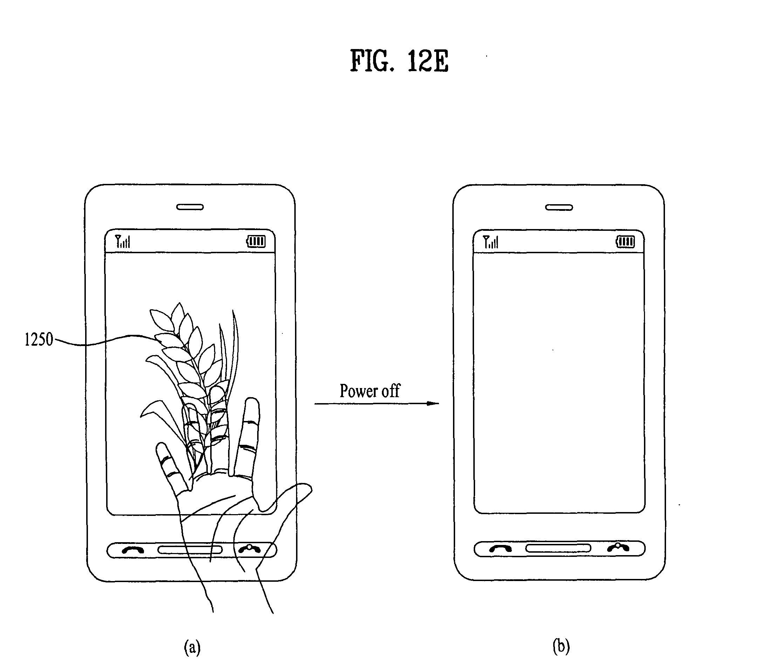

Referring to FIG. 12E, while displaying a first image, in case that a state of blocking a screen using a user hand is maintained over predetermined duration, the mobile terminal 100 is able to turn of the display screen.

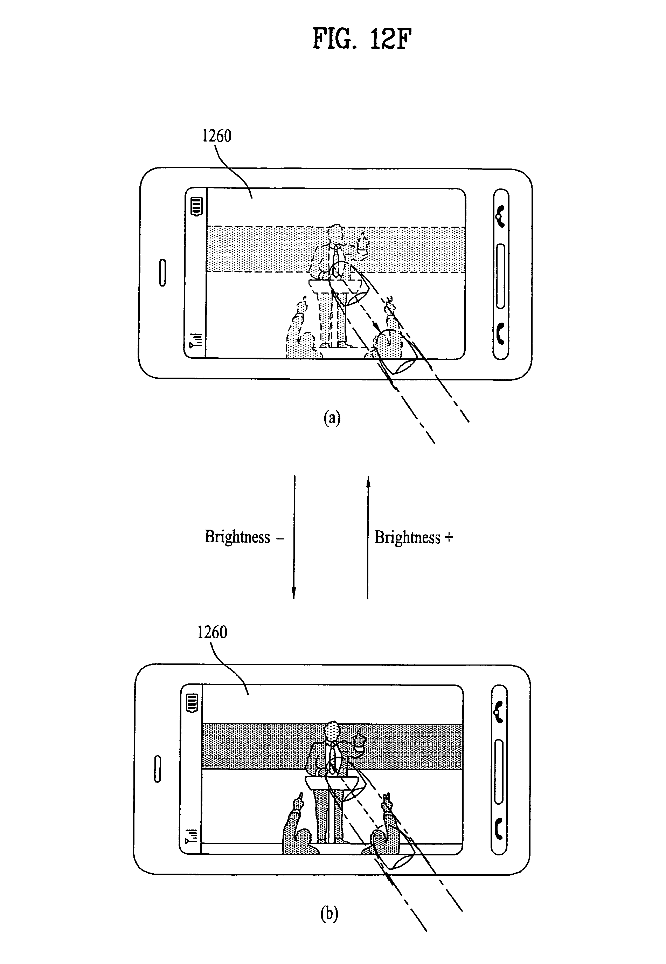

Referring to FIG. 12F, while displaying a first image, in case of receiving a proximity touch in a direction of decreasing a proximity distance using the proximity touchscreen 132, the mobile terminal 100 is able to raise brightness of the first image. In case of receiving a proximity touch in a direction of increasing a proximity distance using the proximity touchscreen 132, the mobile terminal 100 is able to lower the brightness of the first image.

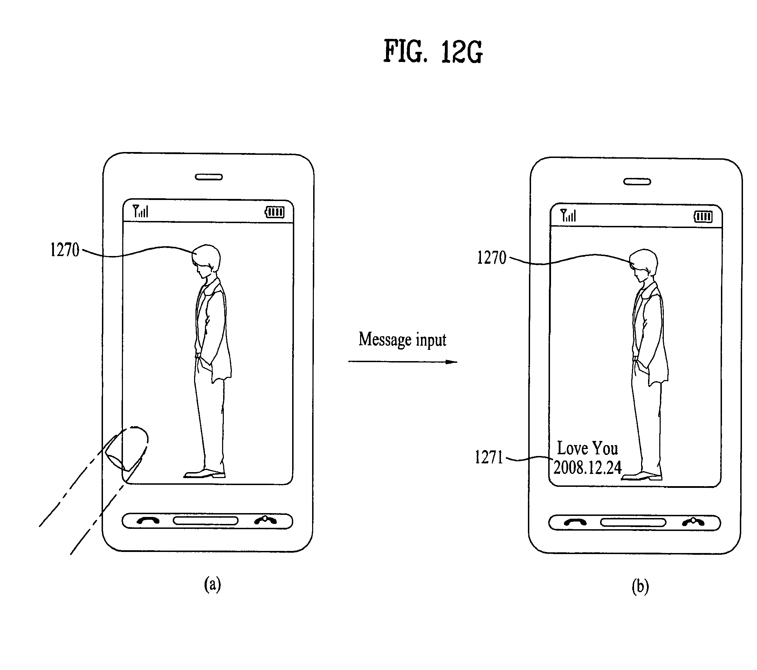

Referring to FIG. 12G, while displaying a first image, in case of detecting a text input action for the first image via the touchscreen 135, the mobile terminal 100 is able to display a text 1271 inputted by the text input action together with the first image.

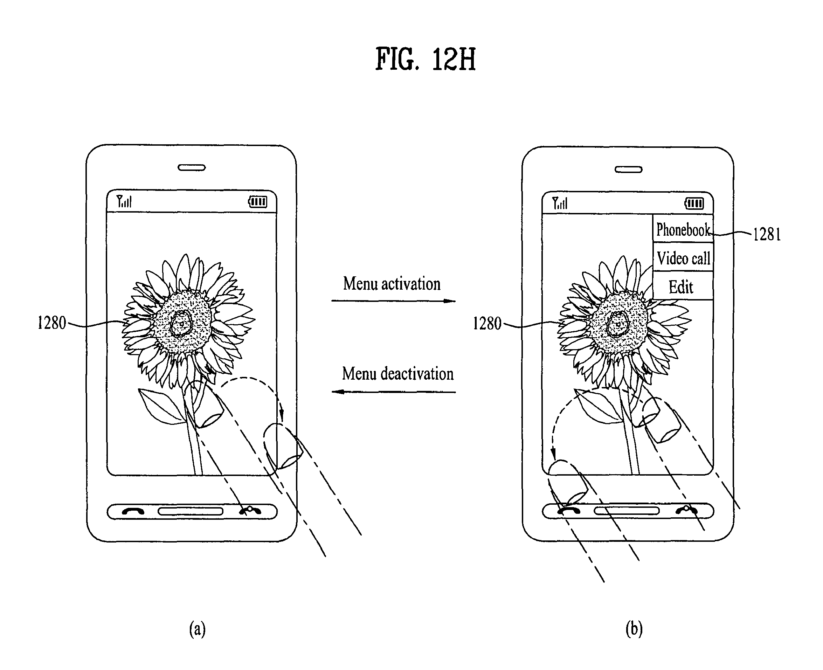

Referring to FIG. 12H, while displaying a first image, in case of receiving an input of a user finger rotation action clockwise via the proximity touchscreen 132, the mobile terminal 100 is able to activate a menu 1281. In case of receiving an input of a user finger rotation action counterclockwise via the proximity touchscreen 132, the mobile terminal 100 is able to deactivate the menu 1281.

It will be apparent to those skilled in the art that various modifications and variations can be specified into other forms without departing from the spirit or scope of the inventions.

According to one embodiment of the present invention, the above-described image processing method can be implemented in a program recorded medium as computer-readable codes. The computer-readable media include all kinds of recording devices in which data readable by a computer system are stored. The computer-readable media include ROM, RAM, CD-ROM, magnetic tapes, floppy discs, optical data storage devices, and the like for example and also include carrier-wave type implementations (e.g., transmission via Internet).

The aforementioned embodiments are achieved by combination of structural elements and features of the present invention in a predetermined type. Each of the structural elements or features should be considered selectively unless specified separately. Each of the structural elements or features may be carried out without being combined with other structural elements or features. Also, some structural elements and/or features may be combined with one another to constitute the embodiments of the present invention.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A mobile terminal (100) comprising:
a display unit (151) configured to display a first image on a screen;
a user input unit (130) receiving an input of a selection action for a specific object included in the displayed first image; and
a controller (180) performing a screen effect processing on the specific object selected by the selection action, the controller controlling the display unit to display the first image including the specific object having the screen effect processing performed thereon.

2. The mobile terminal of claim 1, wherein the user input unit includes at least one of a touchpad, a touchscreen, a motion sensor, a proximity sensor, a camera and a wind detecting sensor as a component for receiving the input of the selection action for the specific object.

3. The mobile terminal of any of claims 1 and 2, wherein the controller performs the screen effect processing including at least one of a zoom-in/out for the selected specific object, a shaking of the selected specific object, a position shift of the selected specific object, a shape change of the selected specific object and a color change of the selected specific object.

4. The mobile terminal of any of claims 1-3, wherein the controller generates at least one image including the specific object having the screen effect processing performed thereon and controls the display unit to display the generated at least one image as an auxiliary image of the first image.

5. The mobile terminal of any of claims 1-4, wherein the controller differently performs the screen effect processing on the specific object according to a type of the inputted selection action.

6. The mobile terminal of any of claims 1-5, wherein if the first image comprises a video including a plurality of still images, the user input unit receives the selection action for the specific object included in the first still image, wherein the controller extracts the specific object selected by the inputted selection action from each of a plurality of the still images and then performs the screen effect processing on the extracted specific object, and wherein the display unit displays the first image including a plurality of the still images, each including the specific object having the screen effect processing performed thereon, under the control of the controller.

7. The mobile terminal of any of claims 1 and 2, wherein the user input unit receives an input of a 3D processing command action for the specific object selected by the inputted selection action and wherein the controller performs a 3D processing on the specific object to correspond to the inputted 3D processing command action and controls the display unit display the first image including the specific object having the 3D processing performed thereon.

8. The mobile terminal of claim 7, wherein the controller generates at least one image including the specific object having the 3D processing performed thereon and controls the display unit to display the generated at least one image as an auxiliary image of the first image.

9. The mobile terminal of any of claims 7 and 8, wherein the controller differently performs the 3D processing on the specific object according to a type of the inputted 3D processing command action.

10. The mobile terminal of any of claims 7-9, wherein if the first image comprises a video including a plurality of still images, the user input unit receives the selection action and the 3D processing command action for the specific object included in the first still image, wherein the controller extracts the specific object selected by the inputted selection action from each of a plurality of the still images and then performs the 3D processing on the extracted specific object, and wherein the display unit displays the first image including a plurality of the still images, each including the specific object having the 3D processing performed thereon, under the control of the controller.

11. A method of processing an image in a mobile terminal, comprising:
a first displaying step (S410) of displaying a first image on a screen;
an inputting step (S420) of receiving an input of a selection action for a specific object included in the displayed first image;
a processing step (S430) of performing a screen effect processing on the specific object selected by the selection action; and
a second displaying step (S440)of displaying the first image including the specific object having the screen effect processing performed thereon.

12. The method of claim 11, the processing step comprising the step of differently performing the screen effect processing on the specific object according to a type of the inputted selection action.

13. The method of any of claims 11 and 12, wherein if the first image comprises a video including a plurality of still images, the inputting step comprises the step of receiving the selection action for the specific object included in the first still image, wherein the processing steps comprises the step of extracting the specific object selected by the inputted selection action from each of a plurality of the still images and performing the screen effect processing on the extracted specific object, and wherein the second displaying step comprises the step of displaying the first image including a plurality of the still images, each including the specific object having the screen effect processing performed thereon.

14. The method of claim 11, wherein the inputting step comprises the step of further receiving an input of a 3D processing command action for the specific object selected by the inputted selection action, wherein the processing step comprises the step of performing a 3D processing on the specific object to correspond to the inputted 3D processing command action, and wherein the second displaying step comprises the step of displaying the first image including the specific object having the 3D processing performed thereon.

15. The method of claim 14, wherein the processing step comprises the step of differently performing the 3D processing on the specific object according to a type of the inputted 3D processing command action.
